(19) **Europäisches Patentamt / European Patent Office / Office européen des brevets**

(11) **EP 3 835 485 B1**

(12) **EUROPÄISCHE PATENTSCHRIFT**

(45) Veröffentlichungstag und Bekanntmachung des Hinweises auf die Patenterteilung:
**24.08.2022   Patentblatt 2022/34**

(21) Anmeldenummer: **19215116.5**

(22) Anmeldetag: **11.12.2019**

(51) Internationale Patentklassifikation (IPC):
**E01C 19/48** (2006.01)

(52) Gemeinsame Patentklassifikation (CPC):
**E01C 19/48**

(54) **MESSSYSTEM FÜR EINE BAUMASCHINE**

MEASURING SYSTEM FOR A CONSTRUCTION MACHINE

SYSTÈME DE MESURE POUR UNE MACHINE DE CONSTRUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.06.2021   Patentblatt 2021/24**

(73) Patentinhaber: **MOBA Mobile Automation AG
65555 Limburg (DE)**

(72) Erfinder:
• **BECHER, Dominik
65555 Limburg (DE)**
• **SCHÖNBACH, Torsten
65555 Limburg (DE)**
• **JURASZ, Jaroslaw
65555 Limburg (DE)**

• **WOLFF, Andreas
65555 Limburg (DE)**

(74) Vertreter: **Pfitzner, Hannes
Schoppe, Zimmermann, Stöckeler
Zinkler, Schenk & Partner mbB
Patentanwälte
Radlkoferstraße 2
81373 München (DE)**

(56) Entgegenhaltungen:
| | |
|---|---|
| EP-A1- 2 789 741 | EP-A1- 2 982 951 |
| EP-A1- 2 990 531 | EP-A1- 3 112 812 |
| EP-A1- 3 270 109 | EP-A1- 3 456 880 |
| WO-A1-00/70150 | CN-A- 102 691 251 |
| DE-A1-102014 222 693 | DE-B3-102016 207 584 |
| DE-U1-202009 016 129 | DE-U1-202013 001 597 |

**Beschreibung**

Ausführungsbeispiele der vorliegenden Erfindung beziehen sich auf ein Messsystem für eine Baumaschine sowie auf die Baumaschine an sich. Weitere Ausführungsbeispiele beziehen sich auf ein entsprechendes Verfahren bzw. ein Computerprogramm. Im Allgemeinen liegt die Erfindung auf dem Gebiet von Baumaschinen, insbesondere fahrbaren Baumaschinen, wie z. B. einem Straßenfertiger. Bevorzugte Ausführungsbeispiele schaffen ein Messsystem zur Bestimmung eines Bewegungsparameters, wie z. B. einer (Fahr-)Geschwindigkeit der Baumaschine unter Zuhilfenahme einer Vorrichtung zur Temperaturmessung.

Allgemein läuft ein Straßenfertiger mit einem Raupen- oder Radfahrwerk auf einem vorbereiteten Untergrund, auf den eine zu fertigende Straßendecke bzw. ein zu fertigender Straßenbelag aufzubringen ist. In Fahrtrichtung hinten am Straßenfertiger ist eine höhenverstellbare Einbaubohle vorgesehen, an deren Vorderseite ein Vorrat des Straßenbelagsmaterials angehäuft ist, der durch eine Fördereinrichtung verteilt und nachgeführt wird, die dafür Sorge trägt, dass auf der Vorderseite der Einbaubohle immer eine ausreichende, jedoch nicht zu große Menge des Straßenbelagsmaterials bevorratet gehalten wird. Die Höhe der Hinterkante der Einbaubohle gegenüber der Oberfläche des vorbereiteten Untergrundes, der gegebenenfalls auch durch eine bereits vorhandene Straßenbelagsdecke gebildet sein kann, legt die Dicke der gefertigten Straßendecke vor ihrer anschließenden weiteren Verfestigung durch Walzen fest. Die Einbaubohle ist an Zugarmen gehalten, die um im Mittenbereich des Straßenfertigers angeordnete Zugpunkte drehbeweglich gelagert sind, wobei die Höhenlage der Einbaubohle von einer Hydraulikverstelleinrichtung festgelegt wird.

Bei Straßenbauvorhaben, beispielsweise beim Neubau einer Straße oder einer Erneuerung eines beschädigten Straßenbelages, ist in der Regel die Qualität des neu aufgebrachten Straßenbaumaterials anhand von Kontrollprüfungen durch die ausführenden Unternehmen zu dokumentieren. Dazu zählt auch die Messung der Temperatur der Asphaltschicht unmittelbar nach dem Einbau durch den Straßenfertiger. Dabei wird die Temperatur des neu aufgebrachten Straßenbaumaterials über die gesamte Einbaubreite unmittelbar hinter der Einbaubohle des Straßenfertigers gemessen.

Nachfolgend wird auf Stand-der-Technik-Ansätze zur Temperaturmessung beim Einbau von Straßenbaumaterial wie Asphalt, Bitumen, Asphaltmischungen oder dergleichen eingegangen.

Aus der WO 2000/70150 A1 ist ein Fahrbahntemperaturüberwachungssystem mit einem Temperatursensor bekannt, wobei der Temperatursensor dabei entweder eine Wärmebildkamera, ein Thermoscanner oder eine Wärmebildkamera, die im "line scan"-Modus arbeitet, sein kann. Der Temperatursensor ist am hinteren Ende eines Straßenfertigers angeordnet, sodass die gesamte Breite der neu gelegten Asphaltschicht gescannt wird. Die aufgenommenen Temperaturwerte können auf einer Anzeigevorrichtung grafisch angezeigt werden.

Weiterhin ist eine Vorrichtung zur Temperaturmessung der Oberfläche von heißem Asphalt, bestehend aus einem sich quer zur Fahrtrichtung bewegenden Infrarottemperaturmesskopf, einem Motor zum Bewegen dieses Sensors und einer Ansteuerung, bereits aus der DE 20 2009 016 129 U1, der DE 20 2013 001 597 U1, der DE 10 2014 222 693 A1 oder der DE 10 2016 207 584 B3 bekannt.

Die CN 102691251 A beschreibt ein Temperaturmesssystem für einen Straßenfertiger mit einzelnen Infrarot-Temperatursensoren, welche an einem Balken angeordnet sind, der quer zur Fahrtrichtung hinter dem Straßenfertiger montiert ist.

Weitere bekannte Systeme zur Bestimmung der Temperatur eines neu eingebauten Straßenbelags werden beispielsweise in der EP 2 789 741 A1, der EP 2 982 951 A1 oder der EP 2 990 531 A1 beschrieben.

Weiterhin ist ein Flächen-Temperatursensor zur Messung der Temperatur der Asphaltschicht unmittelbar nach dem Einbau durch den Straßenfertiger von der Völkel Mikroelektronik GmbH, Münster, Deutschland, bekannt.

Ferner beschreiben die EP 3 112 812 A1 und die EP 3 270 109 A1 Vorrichtungen und Verfahren zur Wegstreckenmessung an einer Baumaschine mit einem Raupenkettenantrieb, mit einem berührungslosen Sensor zur Anordnung an dem Chassis der Baumaschine, wobei der berührungslose Sensor auf die Raupenkette des Raupenkettenantriebs der Baumaschine gerichtet ist. Eine Auswerteeinheit ist mit dem berührungslosen Sensor verbunden und ist wirksam, um basierend auf den von dem berührungslosen Sensor empfangenen Signalen eine durch die Baumaschine zurückgelegte Wegstrecke zu bestimmen.

Im Stand der Technik werden die Temperaturdaten zusammen mit Positionsdaten, die z. B. mittels GPS gewonnen werden, gespeichert. Problematisch ist, dass die lokale Auflösung von GPS nur im Meterbereich bzw. manchmal sogar im Bereich mehrerer Meter liegt und so zusätzliche Informationen für die exakte Positionsbestimmung hinzugezogen werden müssen. Insofern besteht hier der Bedarf nach einem verbesserten Ansatz.

Aufgabe der vorliegenden Erfindung ist es, ein Konzept zu schaffen, das die Positionsbestimmung bei (Straßen-)Baumaschen, wie z. B. Straßenfertigern verbessert.

Die Aufgabe wird durch den Gegenstand der unabhängigen Patentansprüche gelöst.

Ausführungsbeispiele der vorliegenden Erfindung schaffen ein Messsystem für eine Baumaschine, insbesondere eine Straßenbaumaschine. Das Messsystem umfasst eine Temperaturmessvorrichtung sowie eine Auswertevorrichtung. Die Temperaturmessvorrichtung (z.B. ein Thermopile-Array) ist ausgebildet, um eine erste Oberflächentemperatur für einen ersten Bereich eines Messfelds der Temperaturmessvorrichtung sowie eine zweite Oberflächentemperatur für einen zweiten Bereich des Messfelds der Temperaturmessvorrichtung zu ermitteln, wobei die Temperaturmessvorrichtung (und damit das Messfeld) auf eine Referenzfläche, gegenüber welcher die Baumaschine sich bewegt, ausgerichtet ist und das Messfeld in Abhängigkeit von einer Bewegung der Baumaschine entlang der Referenzfläche verschoben wird. Die Auswertevorrichtung ist ausgebildet, anhand einer Verschiebung einer ersten Temperaturzone, definiert für einen ersten Zeitpunkt durch die erste Oberflächentemperatur im ersten Bereich, relativ zu dem ersten und/oder zweiten Bereich oder relativ zu dem Messfeld einen Bewegungsparameter zu bestimmen.

Bezüglich der Temperaturzone sei angemerkt, dass diese entsprechend Ausführungsbeispielen über das Messfeld (von Bereich zu Bereich) verschoben wird bzw. aus dem Messfeld heraus verschoben wird. Eine Temperaturzone ist durch eine vorherrschende Oberflächentemperatur in einem lokalen Bereich (z. B. mehrere Pixel) zu einem ersten Zeitpunkt definiert. Da die Abbildung auf diesen Bereich eben verschoben wird, z. B. in den zweiten Bereich oder in Richtung des zweiten Bereichs, stimmt der erste Bereich sowie die Temperaturzone nur zum ersten Zeitpunkt überein, während zu einem zweiten Zeitpunkt die erste Temperaturzone in einem neu definierten lokalen Bereich (anderen Pixeln) vorliegt. Ausführungsbeispielen der vorliegenden Erfindung liegt die Erkenntnis zugrunde, dass mittels der sowieso vorhandenen Temperaturmessvorrichtung, die beispielsweise als Wärmebildkamera, Thermopile-Array oder Pyrometer-Array ausgeführt sind und eine lokale Auflösung von Temperaturzonen ermöglicht, eine Bestimmung eines Bewegungsparameters gleichsam mit erfolgen kann. Diese Temperaturzonen, d. h. also kleinste lokale Temperaturunterschiede sind in einem Wärmekamerabild oder allgemein unter Verwendung eines Arrays identifizierbar, so dass die Verschiebung dieser so identifizierten Temperaturzonen infolge einer Bewegung der Baumaschine dazu genutzt werde kann, um einen Bewegungsparameter zu bestimmen. Denkbar wäre beispielsweise die Geschwindigkeitsbestimmung. Durch die Beobachtung/Verfolgung einer lokalen Temperaturzone (Temperaturfeld), das heißt also eine Zone mit einer ersten Oberflächentemperatur, die über das Messfeld wandert, kann erkannt werden, inwieweit eine Verschiebung des Messfelds (Sichtfeld der Kamera) stattgefunden hat. Ausgehend von der Annahme, dass die Temperaturmessvorrichtung (zumindest während eines Betriebs) starr auf dem Untergrund bzw. die aufgebrachte Asphaltschicht bzw. allgemein auf eine Referenzfläche, gegenüber welcher sich die Baumaschine bewegt, ausgerichtet ist, rührt die Verschiebung der Temperaturzonen aus der Bewegung der Baumaschine her, so dass durch die Ermittlung der Verschiebung ein Bewegungsparameter, wie z. B. die Geschwindigkeit der Baumaschine, bestimmt werden kann. Dieses Verfahren ist deshalb vorteilhaft, weil so sehr genau, z. B. im Zentimeterbereich, eine Bewegung bzw. ein Bewegungsparameter (wie die Geschwindigkeit, die Bewegungsrichtung oder die Strecke) bestimmt werden kann. Hierbei ist vorteilhaft, dass Effekte wie Schlupf des Fahrwerks oder auch Ungenauigkeiten in GNSS/GPS-Signalen keinen Einfluss haben.

Ausführungsbeispiele der vorliegenden Erfindung beziehen sich auf das Gebiet von Baumaschinen, insbesondere auf eine (Fahr-)Geschwindigkeitsbestimmung (allgemein Bewegungsparameterbestimmung) einer Baumaschine unter Zuhilfenahme einer Vorrichtung zur Bestimmung der Temperatur eines durch eine Baumaschine, insbesondere einen Straßenfertiger, in einer Einbaubreite neu aufgebrachten Straßenbaumaterials wie Asphalt, Bitumen, Asphaltmischgut oder dergleichen. Aus der (Fahr-)Geschwindigkeit können weitere Parameter, wie beispielsweise eine zurückgelegte Wegstrecke usw., ermittelt werden. Es sei angemerkt, dass die Referenzfläche vor und/oder hinter und/oder seitlich (neben) der Baumaschine sein kann.

Entsprechend Ausführungsbeispielen kann die Position bzw. die Strecke bzw. der Regulierungsparameter mit einem GNSS-Signal (oder umgekehrt) abgeglichen werden. Deshalb umfasst das Messsystem entsprechend Ausführungsbeispielen zumindest einen GNSS-Empfänger bzw. einen GPS-Empfänger zur Bestimmung der Position. Dabei ist es auch denkbar, ein GNSS-Signal in Kombination mit einem Korrektursignal für das GNSS-Signal, z. B. einem Korrektursignal von einem stationären Sender oder einem geostationären Sender, zu erhalten oder ein GNSS-Signal in Kombination mit einem Zusatzsignal für das GNSS-Signal (z. B. von einem stationären oder geostationären Sender) zu erhalten. Dieses Korrektursignal bzw. das Zusatzsignal erhöht die Genauigkeit signifikant. Beispielsweise kann der GNSS-Empfänger zusätzlich um einen RTK-Funkempfänger ergänzt sein (RTK (Real-Time Kinematic) GNSS), durch welchen die Positionsdaten (Koordinaten) mit einer sehr hohen Genauigkeit korrigiert werden können. Alternativ ist auch die Verwendung anderer Korrekturdatendienste vorstellbar. Ferner kann auch ein terrestrisches System verwendet werden, wie beispielsweise eine Totalstation mit einem auf der Baumaschine angeordneten Prisma, oder die Position unter Verwendung von Lokalisierungstechniken aus dem Bereich der Mobilfunktechnik durchgeführt werden, beispielsweise durch eine GSM-Triangulation. Denkbar ist in diesem Zusammenhang auch eine Kombination aus globalem Navigationssatellitensystem und terrestrischem System, beispielsweise der Einsatz des sogenannten "Differential-GPS".

Entsprechend Ausführungsbeispielen wird also der Bewegungsparameter anhand einer auf Wärmeänderung bzw. anhand einer sich ändernden (ungleichmäßigen) Wärmeverteilung beruhenden Verschiebung der ersten Oberflächentemperatur über den ersten und/oder den zweiten Bereich erkannt. Ausgehend von der exemplarischen Annahme, dass die Verschiebung entlang einer Bewegungsrichtung der Baumaschine infolge der Bewegung der Baumaschine erfolgt, kann also die Verschiebungsrichtung erkannt werden. Entsprechend bevorzugten Ausführungsbeispielen ist die tatsächliche Ausdehnung des ersten und zweiten Bereichs, z. B. mehrere Pixel, unter Verwendung des jeweiligen Abbildungsmaßstabs bestimmbar, so dass jeder Pixel-Verschebung auch eine reale Strecke zugeordnet ist. Wenn man diese Größe in Relation zu der Zeit, über welche die Verschiebung erfolgt ist, setzt, kann hierbei die Bewegungsgeschwindigkeit mit erkannt werden. Entsprechend Ausführungsbeispielen erfolgt das Beobachten der Verschiebung über mehrere Frames, die unterschiedlichen Zeitpunkten zugeordnet sind. Ein alternativer Bewegungsparameter ist der Verlauf einer Kante (z.B. zwischen zwei nebeneinander eingebauten oder einzubauenden Asphaltschichten) relativ zu der Baumaschine.

Hierbei kann entsprechend Ausführungsbeispielen selbstverständlich auch die zurückgelegte Wegstrecke (relative Position gegenüber Start der Messung) erkannt werden, wobei unter Kenntnis einer absoluten Position, z. B. ausgehend vom GNSS-Signal, dann eine aktualisierte absolute Position mit bestimmbar ist. Auch ist es gemäß Ausführungsbeispielen möglich, einen Bewegungsstatus der Baumaschine zu ermitteln, z.B. ein "Stehenbleiben" (angehaltener Zustand) oder ein "Anfahren" zu detektieren. Ein "Stehenbleiben" und ein "Anfahren" der Baumaschine (des Straßenfertigers) zu ermitteln ist mit einem GPS-Modul fast unmöglich, denn das Signal bzw. die Position "schwankt" meist sehr stark (sogenannter "Randomwalk") und ist folglich hierfür zu ungenau. Des Weiteren ist ein GNSS/GPS-Signal an sich nicht immer verfügbar (beispielsweise unter Brücken oder in Tunneln etc.).

Entsprechend weiteren Ausführungsbeispielen sei angemerkt, dass der erste und der zweite Bereich direkt aneinander angrenzend sein können, wobei jeder Bereich durch eine eigene Oberflächentemperatur charakterisiert ist. Insofern kann beispielsweise der zweite Bereich mit einer zweiten Oberflächentemperatur den ersten Bereich (lokaler Aspekt) mit einer zweiten Oberflächentemperatur umgeben. Darüber hinaus können selbstverständlich auch weitere (dritte Bereiche) vorliegen, die durch andere Pixel und andere Oberflächentemperaturen definiert sind. Bevorzugt werden für die Bestimmung von Bewegungsparametern Bereiche gewählt, die entlang der Bewegungsrichtung angeordnet sind.

Entsprechend Ausführungsbeispielen ist es möglich, dass die Mittel zur Temperaturbestimmung die Asphalttemperatur beim Einbau der Asphaltschicht, die als Referenzfläche dient, mit bestimmen, wobei vorteilhafterweise die Temperaturmesswerte bzgl. der Asphaltschicht zusammen mit der jeweiligen (relativen/absoluten) Position / Strecke gespeichert werden können.

Entsprechend weiteren Ausführungsbeispielen umfasst die Temperaturmessvorrichtung ein Thermopile-Array oder Pyrometer-Array. Ferner kann entsprechend weiteren Ausführungsbeispielen die Temperaturmessvorrichtung zumindest zwei Arrays umfassen. Diese sind z.B. nebeneinander oder hintereinander angeordnet und auf zwei angrenzende Messfelder gerichtet oder sind auf einen sich überlappenden Bereich der Messfelder der Arrays gerichtet. Eine Ausrichtung der Arrays auf einen sich überlappenden Bereich der Messfelder ermöglicht es, dass entsprechend Ausführungsbeispielen ein Abstand der Temperaturmessvorrichtung zur Referenzfläche (Montage- bzw. Anbringungshöhe der Temperaturmessvorrichtung) von der Temperaturmessvorrichtung, insbesondere von einer darin angeordneten Verarbeitungseinheit wie bspw. ein Mikrocontroller, oder von der Auswertevorrichtung bestimmbar bzw. berechenbar ist. Möglich ist auch eine Ausrichtung der Arrays auf einen sich überlappenden Bereich der Messfelder, derart, dass bei einer Änderung des Abstands der Temperaturmessvorrichtung zur Referenzfläche der von den Arrays erfasste überlappende Bereich der Messfelder in seiner Breite quer zur Fahrt- bzw. Bewegungsrichtung der Baumaschine gesehen gleich bleibt.

Ein weiteres Ausführungsbeispiel bezieht sich auf eine Baumaschine, insbesondere eine Straßenbaumaschine, wie einem Straßenfertiger oder eine Straßenwalze mit einem entsprechenden Messsystem.

Ein weiteres Ausführungsbeispiel schafft ein Verfahren zur Bestimmung eines Bewegungsparameters für eine Baumaschine, unter Verwendung eines entsprechenden Messsystems. Das Verfahren umfasst die folgenden Schritte:

- Ermitteln einer ersten Oberflächentemperatur für einen ersten Bereich eines Messfelds und Ermitteln einer zweiten Oberflächentemperatur für einen zweiten Bereich des Messfelds mittels einer Temperaturmessvorrichtung, wobei die Temperaturmessvorrichtung auf eine Referenzfläche, gegenüber welcher die Baumaschine sich bewegt, ausgerichtet ist und das Messfeld in Abhängigkeit von einer Bewegung der Baumaschine entlang der Referenzfläche verschoben wird;

- Bestimmen eines Bewegungsparameters anhand einer Verschiebung einer ersten Temperaturzone, definiert für einen ersten Zeitpunkt durch die erste Oberflächentemperatur im ersten Bereich, relativ zu dem ersten und/oder zweiten Bereich oder relativ zu dem Messfeld.

Das Verfahren kann entsprechend weiteren Ausführungsbeispielen mit einem Computerprogramm ausgeführt werden.

Weiterbildungen sind in den Unteransprüchen definiert. Ausführungsbeispiele der vorliegenden Erfindung werden nachfolgend anhand der beiliegenden Zeichnungen erläutert. Es zeigen:

Fig. 1      eine schematische Darstellung eines Messsystems gemäß einem Basisausführungsbeispiel;

Fig. 2a, b      schematische Darstellungen der Installation des Messsystems an einem Straßenfertiger gemäß einem Ausführungsbeispiel;

Fig. 3a-j      mögliche Implementierungen der Temperaturmessvorrichtung für das Messsystem gemäß erweiterten Ausführungsbeispielen;

Fig. 4      ein schematisches Blockschaltbild des Messsystems gemäß erweiterten Ausführungsbeispielen;

Fig. 5      eine schematische Darstellung eines Straßenfertigers mit einem Messsystem gemäß erweiterten Ausführungsbeispielen;

Fig. 6a-c      schematische Darstellungen zur Illustration von der Verschiebung von Temperaturzonen bei der Verschiebung des Messfelds gemäß Ausführungsbeispielen; und

Fig. 7      eine schematische Darstellung des Messsystems in Interaktion mit weiteren Komponenten der Straßenbaumaschine gemäß Ausführungsbeispielen;

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit den gleichen Bezugszeichen versehen sind, so dass die Beschreibung derer aufeinander anwendbar bzw. austauschbar ist. Auch sei darauf hingewiesen, dass die vorliegende Erfindung anhand eines Straßenfertigers beschrieben ist, jedoch auch für eine Straßenwalze Anwendung finden kann.

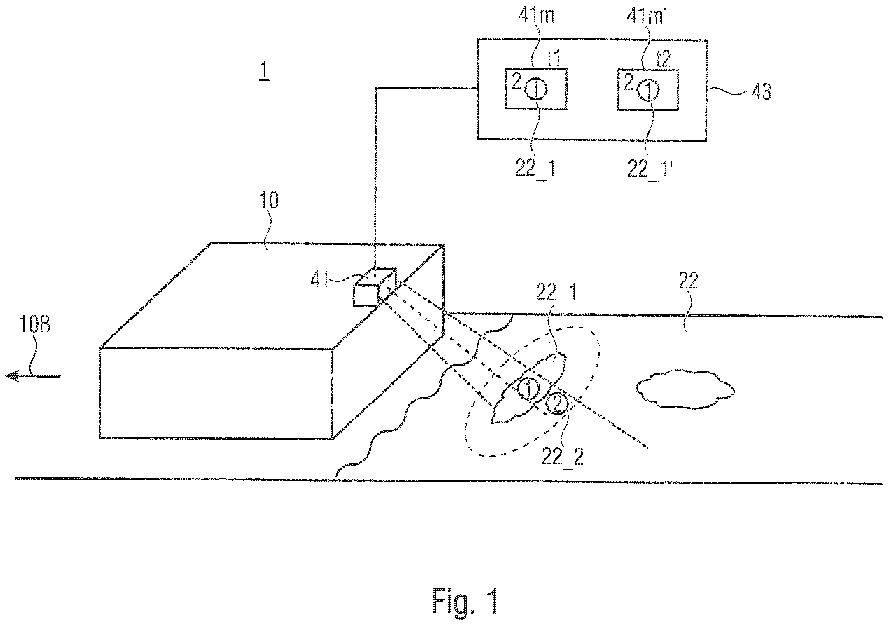

Fig. 1 zeigt ein Messsystem 1 für einen Straßenfertiger 10. Das Messsystem 1 umfasst zumindest eine Temperaturmessvorrichtung 41 sowie eine Auswerteinrichtung 43. Die Temperaturmessvorrichtung 41, die beispielsweise als Thermopile-Array ausgelegt ist, ist auf eine Referenzfläche, hier die eben aufgebrachte Asphaltfläche 22 ausgerichtet. Die Asphaltfläche 22 ist von der Asphaltierung noch heiß, so dass sich eine Oberflächentemperatur einstellt. Diese Oberflächentemperatur variiert lokal, wie anhand der zwei Temperaturspots 22_1 und 22_2 dargestellt ist. Bei nachfolgender Betrachtung wird davon ausgegangen, dass die Temperaturmessvorrichtung 41 ihr Messfeld 41m so auf die Referenzfläche 22 ausgerichtet hat, dass die Spots 22_1 und 22_2 sich im Messfeld befinden. Jedes dieser Bereiche 22_1 und 22_2 hat eine eigene Oberflächentemperatur, so dass beispielsweise zum Zeitpunkt T=1 (t1) in dem Messfeld 41m die Temperaturzone 22_1 erkannt werden kann. Diese erstreckt sich über einen lokalen Bereich mit einer bestimmbaren Ausdehnung, wobei dieser lokale Bereich auf einige Pixel der Messvorrichtung 41 abgebildet wird. Die Grenze zwischen dem Bereich 22_1 und 22_2 ist beispielsweise pixelgenau bestimmbar. Ausgehend hiervon ist es also möglich, der Grenze oder allgemein der Temperaturzone 22_1 eine Position, oder um genau zu sein, eine Relativposition im Verhältnis zu dem Messfeld 41 zuzuordnen.

Infolge der Bewegung des Straßenfertigers 10 entlang der Bewegungsrichtung 10B verschiebt sich das Messfeld 41m (Zeitpunkt t1) für den Zeitpunkt t2, so dass das Messfeld 41m' entsteht. Dieses Messfeld bildet nun in Abhängigkeit von der Bewegung 10B (Bewegungsgeschwindigkeit und Bewegungsrichtung) einen neuen Abschnitt der Referenzfläche (des Asphalts) 22 ab.

Die Temperaturzone 22_1, die sich zum Zeitpunkt t1 in dem ersten Bereich befindet, wird sich aufgrund der Verschiebung des Messfelds 41m in Richtung des zweiten Bereichs (vgl. Zeitpunkt t1) verschieben und folglich zu dem Zeitpunkt t2 in einem neuen ersten Bereich 22_1' liegen. Dieser neue erste Bereich 22_1' befindet sich in dem Messfeld 41m' zu dem Zeitpunkt t2 an einer anderen Position. Diese Positionsverschiebung (z. B. um 20 Pixel) ist aufgrund des Abbildungsmaßstabs, der typischerweise bekannt ist, einer Wegstrecke zuzuordnen.

Die Auswertevorrichtung 43 trackt also die Temperaturzone 22_1 bzw. 22_1' über die Frames bzw. Zeitpunkte t1, t2 hinweg, um einen entsprechenden Bewegungsparameter zu erkennen. Entsprechend einem Ausführungsbeispiel wird unter Tracken also eine Verschiebung der Temperaturzone 22_1, die zum Zeitpunkt t1 im ersten Bereich liegt, relativ zu dem zweiten Bereich 22_2 zum Zeitpunkt t1 verstanden, wenn das System beispielsweise feststellt, dass die Temperaturzone 22_1 im Zeitpunkt t2 nun im Bereich der zweiten Temperaturzone (Bereich beispielsweise durch Pixel definiert) befindet. Alternativ kann das Tracken der Temperaturzone 22_1 auch derart erfolgen, dass nur der erste Bereich (Pixelbereich) betrachtet wird und das System also feststellt, dass die Temperaturzone 22_1 zum Zeitpunkt t2 nicht mehr in demselben Bereich angeordnet ist. Eine weitere Alternative wäre es, dass eine Temperaturzone, hier die Temperaturzone 22_1 gegenüber den Rändern des Messfeldes 41m getrackt wird. Das System kann beispielsweise feststellen, dass zum Zeitpunkt t1 zum Rand in Fahrtrichtung 10B x Pixel gezählt werden konnten, während zum Zeitpunkt t2 x +/- y Pixel erhalten werden. Somit ist es also möglich, die Temperaturmessvorrichtung 41 nicht nur zur Temperaturmessung der Oberfläche 22 eines neu eingebauten Straßenbelags (beispielsweise heißer Asphalt) einzusetzen, sondern auch unter Zuhilfenahme der Auswertevorrichtung 43 aus den gemessenen Temperaturdaten einen Bewegungsparameter, wie beispielsweise die (Fahr-)Geschwindigkeit oder auch weitere Bewegungsparameter des Straßenfertigers 10 sehr genau bzw. wesentlich genauer als im Stand der Technik zu ermitteln. Hintergrund hierfür ist, dass der Straßenfertiger 10, der sich während des Asphalteinbaus meist mit sehr niedriger (Fahr-)Geschwindigkeit im Bereich von ca. 2-20 m pro Minute bewegt, eine so geringe Geschwindigkeit hat, dass diese oftmals schwierig genau ermittelt werden kann. Wenn man also die Wegstrecke im jeweiligen Zeithorizont (Delta zwischen t1 und t2) bestimmt hat, ist also folglich die Fahrgeschwindigkeit bekannt.

Ausgehend von dieser bzw. allgemein ausgehend von den Temperaturmessdaten können entsprechend Ausführungsbeispielen auch noch weitere Parameter, wie z. B. die zurückgelegte Wegstrecke errechnet werden.

Auch wäre es gemäß Ausführungsbeispielen möglich, dass ein Bewegungsstatus ermittelt wird. Es kann z.B. ein "Stehenbleiben" (angehaltener Zustand) detektiert werden, sobald kein Versatz mehr erfolgt. Ein "Stehenbleiben" und ein Anfahren des Straßenfertigers 10 zu ermitteln ist mit einem GPS-Modul fast unmöglich, denn das Signal bzw. die Position "schwankt" meist sehr stark (sogenannter "Randomwalk") und ist folglich hierfür zu ungenau. Des Weiteren ist ein GNSS/GPS-Signal an sich nicht immer verfügbar (beispielsweise unter Brücken oder in Tunneln etc.).

Neben dem Stehenbleiben gelten dieselben Probleme für das Bestimmen eines Anfahrvorgangs mittels GNSS/GPS. Über die Veränderung der Fahrgeschwindigkeit sind auch Anfahrvorgänge sehr gut anhand der Temperaturmessdaten detektierbar. Insofern kann ausgehend von der Grundproblemstellung, die Genauigkeit zu verbessern, auch ein weiteres Problem gelöst werden, nämlich dass, unabhängig von der Position des Straßenfertigers (im Tunnel, unter Brücken, in Stadtschluchten, ......), das hier geschaffene Messsystem 1 dazu dient, um ständig die Position zu bestimmen. Da insbesondere die Relativposition mit dem System 1 bestimmbar wird, kann diese mit GNSS/GPS-Daten abgeglichen werden, um ausgehend von der Relativposition auf eine absolute Position zurückzurechnen.

Insofern wäre es entsprechend Ausführungsbeispielen möglich, dass die Auswertevorrichtung 43 auf die Positionsdaten der Maschine, z.B. des GPS-Systems zugreift (ähnlich, wie es bei den zum Stand der Technik genannten Wegstreckenmesssystemen und Messvorrichtungen aus der EP 3 112 812 A1 und der EP 3 270 109 A1 der Fall ist). Dies ermöglicht zusätzlich auch, dass die Auswertevorrichtung 43 einen Abgleich im Sinne einer Korrektur durchführt. Hierbei ist also die Auswerteeinheit 43 dazu konfiguriert, um beispielsweise in vorbestimmten Abständen die zurückgelegte Wegstrecke der Positionsdaten von der Positionsbestimmungseinrichtung (nicht dargestellt) zu korrigieren.

Wie schon aus den zum Stand der Technik genannten Temperaturmesseinrichtungen bekannt ist, ist die Einbautemperatur eine wesentliche Prozessgröße beim Bau einer Straße und hat erheblichen Einfluss beispielsweise auf die Lebensdauer der neuen Straße. Dabei ist es weiterhin aus der Praxis hinreichend bekannt, dass ein qualitativ hochwertiger Straßenbelag auch eine überwiegend gleichbleibende Einbaugeschwindigkeit ohne "Stehenbleiben" und "Anfahren" des Straßenfertigers erfordert, da es ansonsten beispielsweise zu Materialentmischung sowie "Hot-Spots" oder "Cold-Spots", d. h. Bereiche im Straßenbelag, an denen das Material mit einer nicht optimalen Temperatur eingebaut wurde, kommen kann. Dies wird beispielsweise in der EP 3 456 880 A1 beschrieben. Somit besteht ein direkter Zusammenhang zwischen einer Temperaturmessung der Oberfläche eines neu eingebauten Straßenbelags und den zuvor beschriebenen Parametern "(Fahr-)Geschwindigkeit'", "Stehenbleiben" und "Anfahren" des Straßenfertigers.

Durch das hier geschaffene System 1 werden also diese qualitätsbestimmenden Parameter (sogar einzig und allein durch die Temperaturerfassungsvorrichtung 41 mit Auswertevorrichtung 43) gemeinsam erhoben.

Ein weiterer Vorteil besteht darin, dass das hier gezeigte Wegstreckenmesssystem (Messsystem 1 zur Bestimmung eines Bewegungsparameters) "schlupffrei" arbeitet.

Ferner ist bei bekannten Wegstreckenmesssystemen meist das Problem "Schlupf" vorhanden, d. h. die meisten Wegmesssysteme, wie beispielsweise die zum Stand der Technik genannten Wegstreckenmessvorrichtungen gemäß der EP 3 112 812 A1 oder der EP 3 270 109 A1 oder aber ein Radsensor auf der Radnabe (meist verwendet in den USA), sind schlupfbehaftet bzw. nicht gänzlich "schlupffrei",

Entsprechend bevorzugten Ausführungsbeispielen ist der Sensor 41 als Thermopile-Array ausgeführt. Ein weiterer Vorteil bei Ausführungsbeispielen besteht darin, dass keine mechanisch beweglichen Teile in der Temperaturmessvorrichtung vorhanden sind. Bei den aus dem Stand der Technik bekannten Temperaturmessvorrichtungen wird beispielsweise beim genannten Temperaturscanner der Infrarot-Temperatursensor kontinuierlich hin und her bewegt. Eine Wärmebildkamera hat in der Regel einen "Shutter", d. h. ein mechanisch bewegliches Teil.

Ferner wird durch die Erfindung die Anzahl der an der Maschine befindlichen Sensorsysteme reduziert, da kein zusätzliches (Fahr-)Geschwindigkeits- bzw. Wegstreckenmesssystem benötigt wird.

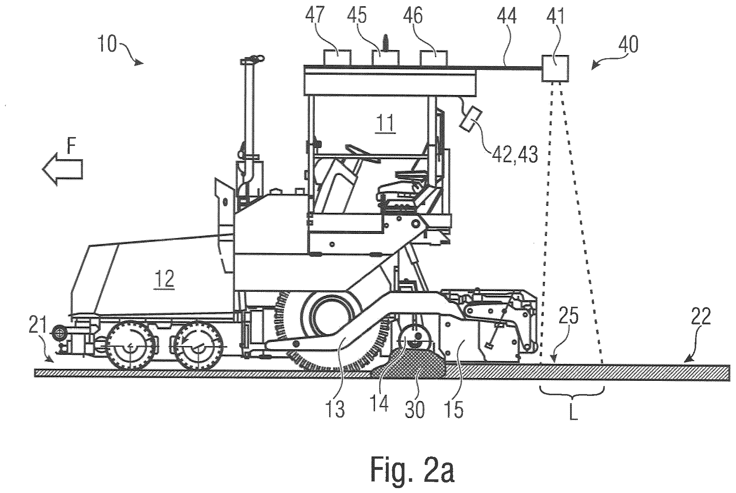

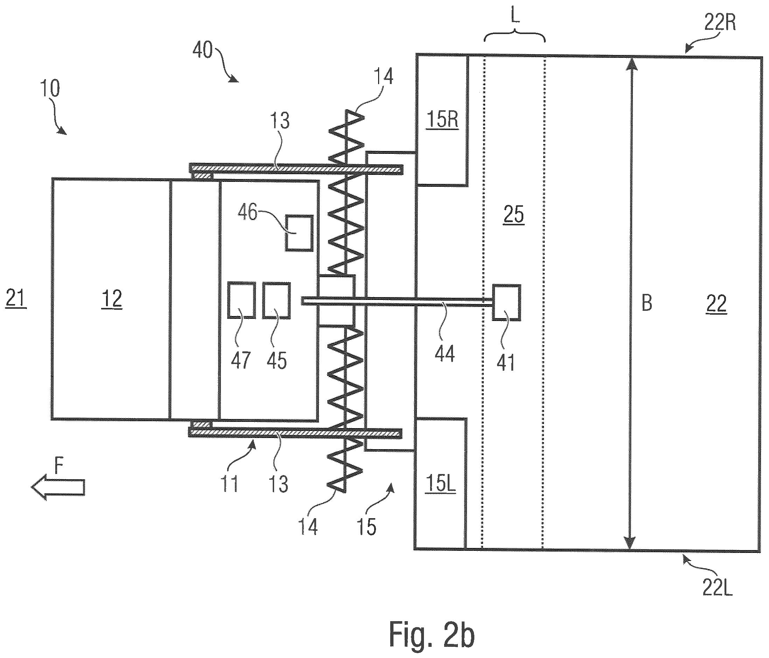

Nachfolgend werden Bezug nehmend auf Fig. 2a und 2b Details des Messsystems erläutert.

Figur 2a zeigt schematisch einen selbstfahrenden Straßenfertiger 10 in seitlicher Ansicht als Beispiel für eine Baumaschine. Bekanntermaßen umfasst der Straßenfertiger 10 einen Gutbunker 12 zur Aufnahme von Baumaterial bzw. Straßenbelagsmaterial 30, wie zum Beispiel Asphalt, Schotter oder dergleichen, sowie eine Einbau- oder Glättbohle 15, die an Zugarmen 13 angeordnet ist und von der Fahreinheit bzw. Traktoreinheit des Straßenfertigers 10 gezogen wird. Der Straßenfertiger 10 bewegt sich während des Materialeinbaus in Fahrtrichtung F auf einer Oberfläche des zu asphaltierenden Untergrunds 21. Vor der Einbaubohle 15 ist eine Verteilerschnecke 14 angeordnet, welche das einzubauende Baumaterial / Straßenbelagsmaterial 30, welches während des Einbaus ausgehend von dem Gutbunker 12 über Förderbänder (nicht dargestellt) in Richtung der Verteilerschnecke 14 transportiert wird, quer zur Fahrtrichtung des Straßenfertigers 10 vor der Einbaubohle 15 verteilt, sodass das einzubauende Baumaterial / Straßenbelagsmaterial 30 während des Einbaus stets in ungefähr gleichmäßiger Menge vor der Einbaubohle 15 verfügbar ist. Oberhalb der Verteilerschnecke 14 und den nicht dargestellten Förderbändern befindet sich ein Fahrerstand 11, ausgehend von diesem die Maschine 10 u. a. gelenkt wird.

Am Straßenfertiger 10 ist ein Temperaturerfassungssystem 40 angeordnet, um die Temperatur der Oberfläche eines neu eingebauten (asphaltierten) Straßenbelags 22 unmittelbar nach dem Einbau durch den Straßenfertiger 10 zu erfassen. Das Temperaturerfassungssystem 40 umfasst hierfür eine Temperaturmessvorrichtung 41, welche an einem Träger 44 befestigt ist. Die Temperaturmessvorrichtung 41 ist dabei derart am Träger 44 angeordnet, dass die Temperatur der Oberfläche des neu eingebauten Straßenbelags 22 in vorteilhafter Weise unmittelbar im Erfassungsbereich 25 hinter der Bohlenhinterkante gemessen werden kann. Die Temperaturmessvorrichtung 41 kann dabei lösbar am Träger 44 befestigt sein, beispielsweise geschraubt oder geklemmt oder mittels einer magnetischen Halterung, sodass die Temperaturmessvorrichtung 41 nach Beendigung der Bauarbeiten zum Beispiel aus Diebstahlschutzgründen einfach abmontiert werden kann. Der Träger 44 ist wiederum, wie beispielsweise in den Figuren dargestellt, am Dach des Straßenfertigers 10 befestigt; denkbar sind jedoch auch andere Befestigungsorte an der Maschine 10, wie bspw. an der Einbaubohle 15. Vorzugsweise besteht der Träger 44 aus einem einzelnen mechanischen Teil oder aus einzeln verbindbaren mechanischen Teilen oder aber auch aus teleskopierbaren Einzelteilen, um die Temperaturmessvorrichtung 41 in einem (in Fahrtrichtung F des Straßenfertigers 10 gesehen) optimalen Abstand zur Bohlenhinterkante entsprechend einstellen zu können, sodass die Temperatur der Oberfläche des neu eingebauten Straßenbelags 22 unmittelbar hinter der Bohlenhinterkante erfasst werden kann.

Das Temperaturerfassungssystem 40 umfasst weiterhin eine Bedien- und Anzeigevorrichtung 42 und eine Prozessrechnereinheit bzw. Auswertungseinrichtung 43 sowie eine Kommunikationsvorrichtung 45, eine Wetterstation 46 und eine Positionsbestimmungseinrichtung 47. Die letztgenannten Komponenten des Temperaturerfassungssystems 40, d. h. die Kommunikationsvorrichtung 45, die Wetterstation 46 und die Positionsbestimmungseinrichtung 47, sind vorzugsweise auf dem Dach des Straßenfertigers 10 (wie in den Figuren dargestellt) befestigt, können aber auch beispielsweise am Träger 44, an dem auch die Temperaturmessvorrichtung 41 befestigt ist, befestigt sein. Alle Komponenten des Temperaturerfassungssystems 40 sind vorzugsweise über Kabelverbindungen mit der Prozessrechnereinheit bzw. der Auswertungseinrichtung 43 elektrisch verbunden. Die Prozessrechnereinheit bzw. Auswertungseinrichtung 43 empfängt von der Temperaturmessvorrichtung 41 die gemessenen Temperaturdaten, um diese einzulesen und entsprechend weiterzuverarbeiten. So können zum Beispiel gemessene Temperaturdaten mit Positionsdaten verknüpft bzw. kombiniert werden, um diese in der Prozessrechnereinheit bzw. Auswertungseinrichtung 43 abzuspeichern. Dies ermöglicht beispielsweise eine spätere Lokalisierung eventueller Fehlstellen in der Oberfläche des neu eingebauten Straßenbelags 22. Auch besteht die Möglichkeit, Temperaturdaten sowie die dazugehörigen Positionsdaten mittels der Kommunikationsvorrichtung 45 an ein externes Gerät oder ein anderes Baufahrzeug, beispielsweise eine hinter dem Straßenfertiger 10 fahrende Straßenwalze, senden zu können. Daten der Wetterstation 46 können ebenfalls bei der Weiterverarbeitung von Temperaturdaten berücksichtigt werden, beispielsweise können diese zusammen mit Temperatur- und Positionsdaten für eine spätere Weiterverarbeitung abgespeichert werden.

Die Prozessrechnereinheit bzw. Auswertungseinrichtung 43 ist mit der Anzeige- und Bedienvorrichtung 42 elektrisch verbunden, welche als sogenanntes Mensch-Maschine-Interface (MMI) dient. Ein Bediener, beispielsweise das Bohlenpersonal, kann mittels der Anzeige- und Bedienvorrichtung 42 beispielsweise den Verlauf bzw. das Profil der gemessenen Temperaturen während des Einbaus überwachen und somit Fehlstellen in der Oberfläche des neu eingebauten Straßenbelags 22 bereits während des Einbaus erkennen (und gegebenenfalls weitere Maßnahmen ergreifen). Ferner können mittels der Anzeige- und Bedienvorrichtung 42 durch das Bedienpersonal Parameter und weitere Einstellungen an dem Temperaturerfassungssystem 40 vorgenommen werden, beispielsweise zu Kalibrierzwecken der Temperaturmessvorrichtung 41 oder zur Änderung bzw. Anpassung der Bildschirmdarstellung. In einer bevorzugten Variante ist die Prozessrechnereinheit/Auswertungseinrichtung 43 und die Bedien- und Anzeigevorrichtung 42 in einem Gerät bzw. in einem Gehäuse zusammengefasst, d. h. in einem Gerät oder Gehäuse integriert. Wie in den Figuren dargestellt, ist die Prozessrechnereinheit/Auswertungseinrichtung 43 und die Bedien- und Anzeigevorrichtung 42 direkt unterhalb des Daches des Straßenfertigers 10 im hinteren Bereich des Fahrerstands 11 angeordnet. Dadurch ist einerseits der Bildschirm der Bedien- und Anzeigevorrichtung 42 für das Bohlenpersonal recht gut ablesbar und andererseits werden die gemessenen Temperaturwerte direkt im Bereich der eigentlichen Temperaturmessung, d. h. im Bereich der Temperaturmessvorrichtung 41 und der Einbaubohle 15 angezeigt.

Denkbar ist jedoch auch, dass je nach Ausführungsform des Temperaturerfassungssystems 40 die Prozessrechnereinheit/Auswertungseinrichtung 43 oder zumindest ein Teil davon in der Temperaturmessvorrichtung 41 integriert ist, um in der Temperaturmessvorrichtung 41 beispielsweise Temperaturbilder zu analysieren oder eine Temperaturbildauswertung vorzunehmen oder auch Berechnungen durchzuführen. Dies hat den Vorteil, dass beispielsweise große Mengen von Rohdaten von Temperaturwerten nicht mehr über Kabelverbindungen übertragen werden müssen.

Figur 2b zeigt schematisch den in Figur 2a dargestellten selbstfahrenden Straßenfertiger 10 in einer Draufsicht, d. h. mit Blick von oben. Neben den bereits zu Figur 2a beschriebenen Komponenten des Straßenfertigers 10 ist hier zu erkennen, dass es sich bei der Einbaubohle 15 um eine mittels seitlichen Ausziehelementen 15L und 15R variable Einbaubohle 15 handelt, wodurch eine Einbaubreite B des neu eingebauten Straßenbelags 22 während des Einbaus entsprechend verändert werden kann. Der neu eingebaute Straßenbelag 22 wird seitlich durch Kanten 22L und 22R begrenzt.

Die bereits zuvor beschriebene Temperaturmessvorrichtung 41, welche an dem Träger 44 befestigt ist, misst die Temperatur der Oberfläche des neu eingebauten (asphaltierten) Straßenbelags 22 unmittelbar nach dem Einbau durch den Straßenfertiger 10, und zwar wie in Figur 2a/b dargestellt in einem Erfassungsbereich 25. Der Erfassungsbereich 25 erstreckt sich quer zur Fahrtrichtung F des Straßenfertigers 10 gesehen über die gesamte Einbaubreite B sowie in Fahrtrichtung F des Straßenfertigers 10 gesehen über eine Länge L, sodass von der Temperaturmessvorrichtung 41 mindestens eine Fläche B x L (Erfassungsbereich 25) erfasst wird. Da sich, wie oben bereits erläutert, der Straßenfertiger 10 während des Materialeinbaus in Fahrtrichtung F auf einer Oberfläche des zu asphaltierenden Untergrunds 21 bewegt, so bewegt sich auch der Erfassungsbereich 25 mit der gleichen Geschwindigkeit wie der Straßenfertiger 10 in Fahrtrichtung F. Das heißt, die Temperaturmessvorrichtung 41 und somit auch der Erfassungsbereich 25 "wandern" während des Materialeinbaus mit der gleichen Geschwindigkeit wie der Straßenfertiger 10 in dessen Fahrtrichtung F, wobei die Temperaturmessvorrichtung 41 kontinuierlich Temperaturwerte der Oberfläche des neu eingebauten (asphaltierten) Straßenbelags 22 misst.

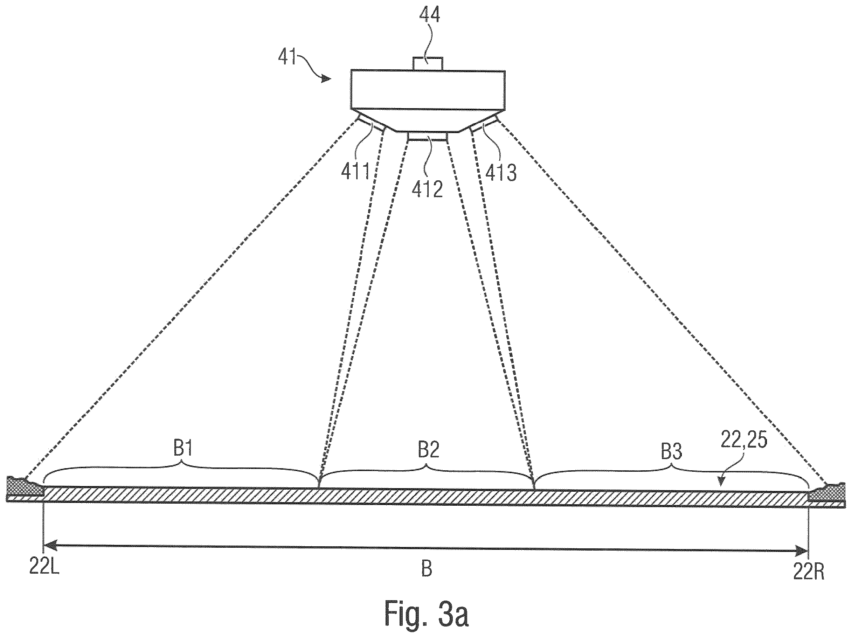

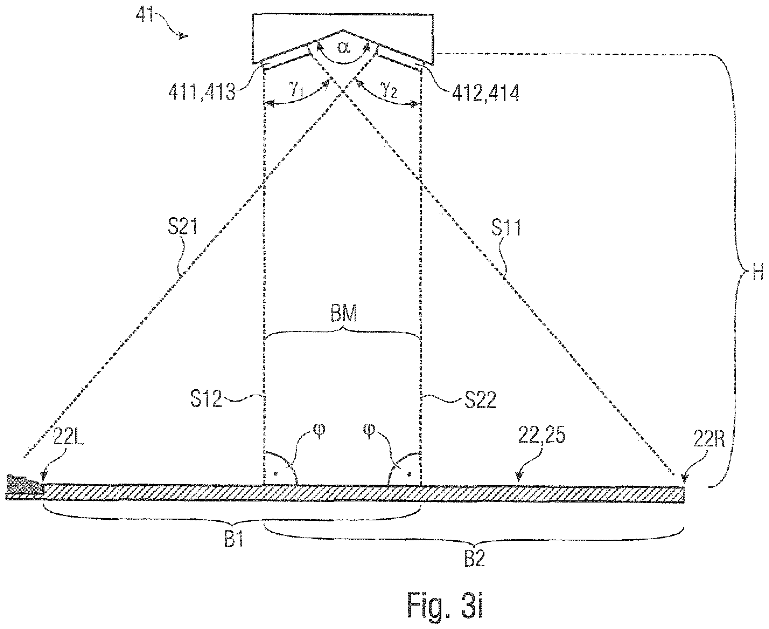

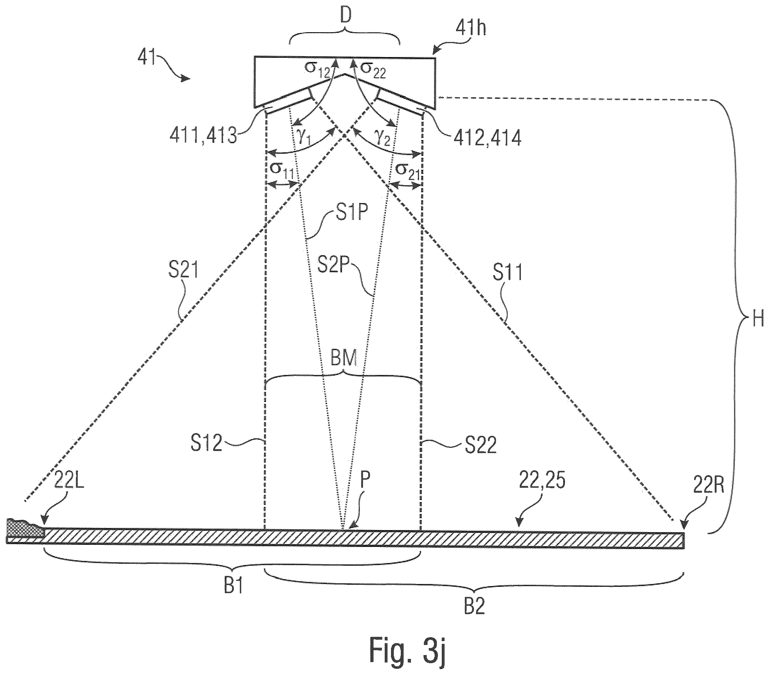

Die Figuren 3a bis 3d sowie 3i und 3j zeigen schematisch verschiedene Ausführungsbeispiele der Temperaturmessvorrichtung 41, wobei hier auch weitere - insbesondere nicht beschriebene - Ausführungen bzw. Anordnungen denkbar sein können. Bei allen in den Figuren dargestellten Ausführungen ist die Temperaturmessvorrichtung 41 an dem Träger 44 angeordnet. Es ist jedoch auch denkbar, eine oder mehrere der Temperaturmessvorrichtungen 41 ohne den Träger 44 direkt am Dach oder an anderen geeigneten Befestigungsorten an dem Straßenfertiger 10 anzuordnen (beispielsweise an der Einbaubohle 15) und hierfür entsprechend angepasste Befestigungsmechanik(en) zu verwenden. Denkbar ist es auch, dass bei der Verwendung von mehreren Temperaturmessvorrichtungen 41 diese in unterschiedlichen Anbringungshöhen sowie Abständen zueinander am Straßenfertiger angeordnet sein können.

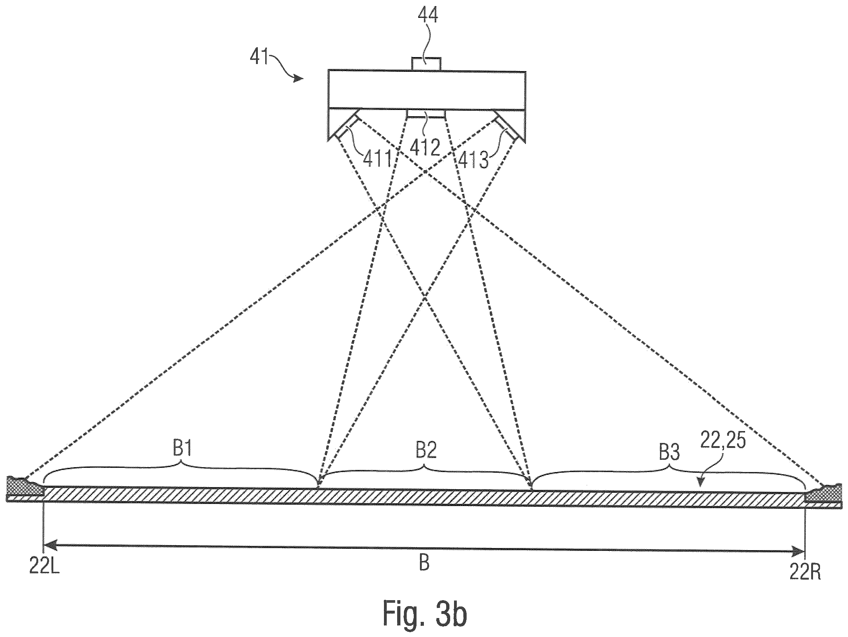

Bei der Temperaturmessvorrichtung 41 gemäß den Figuren 3a und 3b umfasst diese jeweils drei einzelne Temperatursensoren 411, 412 und 413, welche auf die Oberfläche des neu eingebauten (asphaltierten) Straßenbelags 22 gerichtet sind. Jeder der einzelnen Temperatursensoren 411, 412 und 413 erfasst quer zur Fahrtrichtung F des Straßenfertigers 10 gesehen einen Teilbereich B1, B2 und B3 der Gesamteinbaubreite B, wobei zusammenaddiert die Teilbereiche B1, B2 und B3 die Gesamteinbaubreite B ergeben. Die einzelnen Temperatursensoren 411, 412 und 413 sind in einem Winkel zueinander angeordnet, derart, dass sich die zu erfassenden Teilbereiche B1, B2 und B3 in vorteilhafter Weise ein wenig überlappen, damit keine, nicht erfassten Bereiche zwischen den Teilbereichen B1, B2 und B3 entstehen.

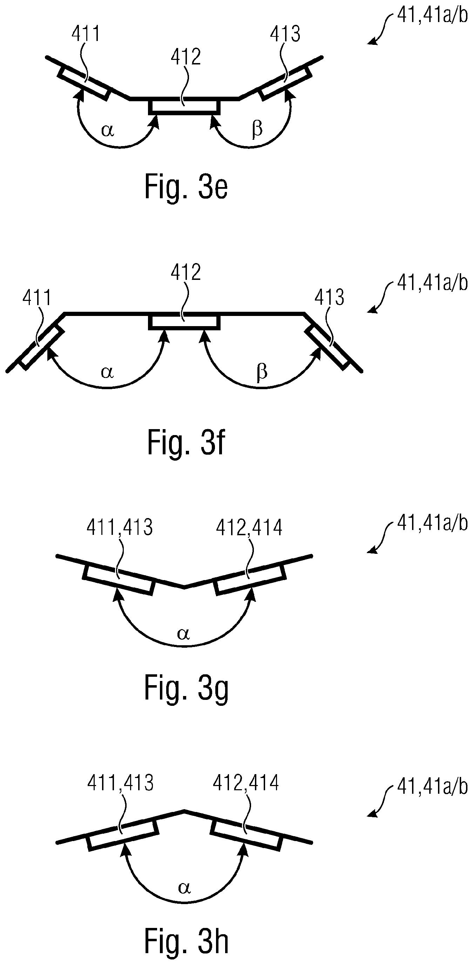

In den Ausführungsbeispielen gemäß den Figuren 3a und 3b sind die Temperatursensoren 411 und 412 sowie 412 und 413 in einem Winkel von ca. 220° (Figur 3a, allgemein Bereich zwischen 180° und 270°) bzw. ca. 140° (Figur 3b, allgemein Bereich zwischen 90° und 180°) zueinander verdreht angeordnet (siehe hierzu schematische Darstellungen in den Figuren 3e und 3f sowie deren Beschreibung weiter unten). Je nach Anbringungshöhe der Temperaturmessvorrichtung 41 über der Oberfläche des neu eingebauten (asphaltierten) Straßenbelags 22 am Straßenfertiger 10 bzw. den Abständen, welche die einzelnen Temperatursensoren 411, 412 und 413 zueinander haben, können die Winkel, die die Temperatursensoren 411, 412 und 413 zueinander aufweisen, auch abweichend bzw. unterschiedlich sein. Gut erkennbar ist in den Figuren 3a und 3b, dass neben den äußeren Teilbereichen B1 und B3 auch die Straßenrandbereiche, die über die Randbereiche (Kanten) 22L und 22R des neu eingebauten (asphaltierten) Straßenbelags 22 hinausgehen, von den Temperatursensoren mit erfasst werden. Dadurch wäre es mit diesen Ausführungsformen auch möglich, eine Gesamteinbaubreitenberechnung durchzuführen, und zwar anhand des aufgenommenen Temperaturprofils. Da die Straßenrandbereiche, die über die Randbereiche (Kanten) 22L und 22R des neu eingebauten (asphaltierten) Straßenbelags 22 hinausgehen, eine wesentlich kühlere Temperatur aufweisen als der neu gelegte Asphalt 22, können die Randbereiche (Kanten) 22L und 22R genau erfasst werden, sodass die Prozessrechnereinheit bzw. Auswertungseinrichtung 43 in der Lage wäre, eine Gesamteinbaubreite B aufgrund des Temperaturprofils berechnen zu können.

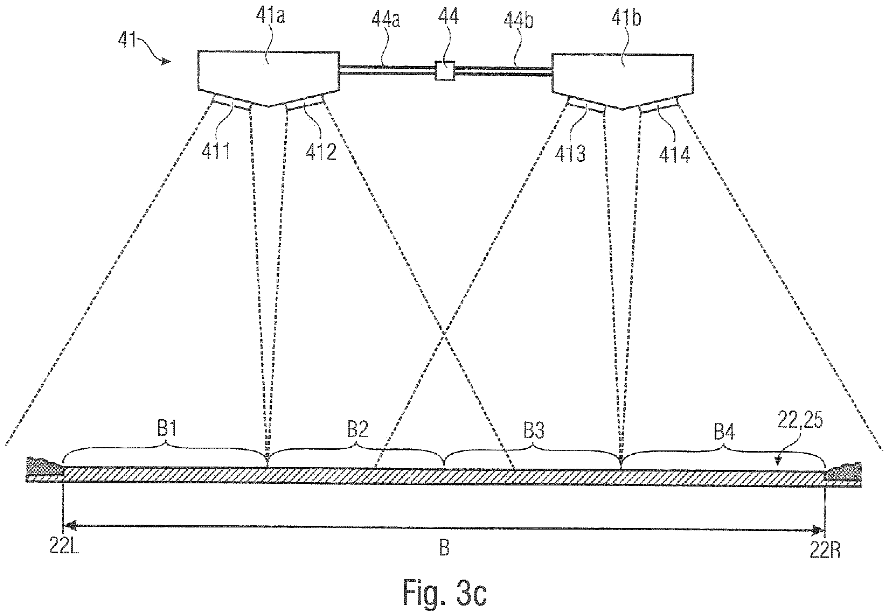

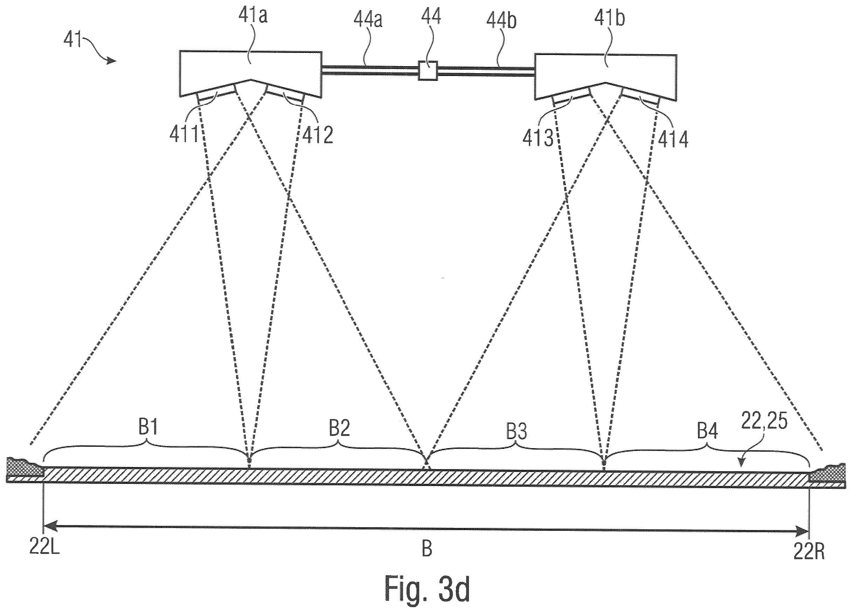

Bei der Temperaturmessvorrichtung 41 gemäß den Figuren 3a und 3b umfasst diese jeweils drei einzelne Temperatursensoren 411, 412 und 413. Denkbar ist es jedoch auch, dass die Temperaturmessvorrichtung 41 nur zwei einzelne Temperatursensoren umfassen (wie in den Figuren 3c und 3d dargestellt), oder auch nur einen einzelnen Temperatursensor.

Figuren 3c und 3d zeigen die Temperaturmessvorrichtung 41 aufgeteilt in zwei einzelne Temperaturmessvorrichtungen 41a und 41b, welche jeweils über eine Trägermechanik 44a und 44b beabstandet mit dem Träger 44, vorzugsweise fest und unbeweglich, verbunden sind. Die einzelnen Temperaturmessvorrichtungen 41a und 41b können dabei beispielsweise in einem Abstand von ca. 2,50 m voneinander beabstandet sein, was in etwa der Breite des Fahrerstanddachs, der Fahrzeugbreite bzw. der Grundbohlenbreite entspricht. Jede der beiden Temperaturmessvorrichtungen 41a und 41b umfasst zwei einzelne Temperatursensoren 411 und 412 sowie 413 und 414, welche auf die Oberfläche des neu eingebauten (asphaltierten) Straßenbelags 22 gerichtet sind. Jeder der einzelnen Temperatursensoren 411, 412, 413 und 414 erfasst quer zur Fahrtrichtung F des Straßenfertigers 10 gesehen einen Teilbereich B1, B2, B3 und B4 der Gesamteinbaubreite B, wobei zusammenaddiert die Teilbereiche B1, B2, B3 und B4 die Gesamteinbaubreite B ergeben. Die einzelnen Temperatursensoren 411 und 412 sowie 413 und 414 sind jeweils in einem Winkel zueinander angeordnet, derart, dass sich die zu erfassenden Teilbereiche B1, B2, B3 und B4 etwas überlappen, sodass es möglichst keinen nicht erfassten Bereich zwischen den Teilbereichen B1, B2, B3 und B4 gibt. Die Temperatursensoren 411 und 412 sowie 413 und 414 sind beispielsweise in einem Winkel von ca. 220° (Figur 3c, allgemein Bereich zwischen 180° und 270°) bzw. ca. 140° (Figur 3d, allgemein Bereich zwischen 90° und 180°) zueinander verdreht angeordnet (siehe auch schematische Darstellung in den Figu-ren 3g und 3h sowie deren Beschreibung weiter unten), wobei je nach Anbringungshöhe der Temperaturmessvorrichtung 41 über der Oberfläche des neu eingebauten (asphaltierten) Straßenbelags 22 am Straßenfertiger 10 bzw. den Abständen, welche die einzelnen Temperatursensoren 411 und 412 sowie 413 und 414 zueinander haben, die Winkel, die die Temperatursensoren 411 und 412 sowie 413 und 414 zueinander aufweisen, auch abweichend bzw. unterschiedlich sein können. Gut erkennbar ist in der Figur 3c, dass sich die Erfassungsbereiche der Temperatursensoren 412 und 413 überlappen, sodass der Temperatursensor 412 auch einen Teil des Bereichs B3 miterfasst und der Temperatursensor 413 auch einen Teil des Bereichs B2 miterfasst. Analog hierzu ist in der Figur 3d erkennbar, dass sich die Erfassungsbereiche der Temperatursensoren 411 und 414 überlappen, sodass der Temperatursensor 411 auch einen Teil des Bereichs B3 miterfasst und der Temperatursensor 414 auch einen Teil des Bereichs B2 miterfasst. Ferner ist in den Figuren 3c und 3d erkennbar, dass neben den äußeren Teilbereichen B1 und B4 auch die Straßenrandbereiche, die über die Randbereiche (Kanten) 22L und 22R des neu eingebauten (asphaltierten) Straßenbelags 22 hinausgehen, mit erfasst werden. Das zeigt, dass mit den Ausführungsformen gemäß Figuren 3c und 3d die erfassbare Gesamteinbaubreite B deutlich breiter sein kann als mit den Ausführungsformen gemäß den Figuren 3a und 3b. Die Abstände der einzelnen Temperaturmessvorrichtungen 41a und 41b zueinander könnten also noch vergrößert werden, um die erfassbare Gesamteinbaubreite B zu vergrößern. Ferner zeigt es, dass es mit diesen Ausführungsformen auch möglich ist, eine Gesamteinbaubreitenberechnung durchzuführen, und zwar anhand des aufgenommenen Temperaturprofils. Da die Straßenrandbereiche, die über die Randbereiche (Kanten) 22L und 22R des neu eingebauten (asphaltierten) Straßenbelags 22 hinaus gehen, eine wesentlich kühlere Temperatur aufweisen als der neu gelegte Asphalt 22, können die Randbereiche (Kanten) 22L und 22R genau erfasst werden, sodass die Prozessrechnereinheit bzw. Auswertungseinrichtung 43 in der Lage wäre, eine Gesamteinbaubreite B aufgrund des Temperaturprofils berechnen zu können.

Figuren 3e bis 3h zeigen, wie "in einem Winkel zueinander angeordnet" bzgl. der einzelnen Temperatursensoren 411, 412, 413 und 414 gemeint bzw. zu verstehen ist. Dazu sind der Einfachheit halber in den Figuren 3e bis 3h jeweils nur Ausschnitte der aus den Figuren 3a bis 3d bekannten Temperaturmessvorrichtungen 41 und 41a/b dargestellt.

Figur 3e und 3f zeigen, wie die Temperatursensoren 411 und 412 in einem Winkel α und die Temperatursensoren 412 und 413 in einem Winkel β zueinander angeordnet sind, nämlich - wie oben bereits zu den Figuren 3a und 3b beschrieben - in einem Winkel α/β von beispielsweise ca. 220° (Figur 3e, allgemein ein Bereich zwischen 180° und 270°) und ca. 140° (Figur 3f, allgemein ein Bereich zwischen 90° und 180°). Dabei können die Winkel α und β sowohl gleich als auch unterschiedlich sein. Je nach Anbringungshöhe der Temperaturmessvorrichtung 41 über der Oberfläche des neu eingebauten (asphaltierten) Straßenbelags 22 am Straßenfertiger 10 bzw. den Abständen, welche die einzelnen Temperatursensoren 411, 412 und 413 zueinander haben, können die Winkel α und β, die die Temperatursensoren 411, 412 und 413 jeweils zueinander aufweisen, auch abweichend bzw. unterschiedlich sein.

Figur 3g und 3h zeigen weiterhin, wie die Temperatursensoren 411 und 412 sowie 412 und 413 in einem Winkel α zueinander angeordnet sind, nämlich - wie oben bereits zu den Figuren 3c und 3d beschrieben - in einem Winkel α von beispielsweise ca. 220° (allgemein ein Bereich zwischen 180° und 270°) und ca. 140° (Figur 3h, allgemein ein Bereich zwischen 90° und 180°). Je nach Anbringungshöhe der Temperaturmessvorrichtungen 41 und 41a/b über der Oberfläche des neu eingebauten (asphaltierten) Straßenbelags 22 am Straßenfertiger 10 bzw. den Abständen, welche die einzelnen Temperatursensoren 411 und 412 sowie 413 und 414 zueinander haben (Abstand zwischen den Temperaturmessvorrichtungen 41a und 41b), kann der Winkel α, den die Temperatursensoren 411 und 412 sowie 413 und 414 jeweils zueinander aufweisen, auch abweichend bzw. unterschiedlich sein.

Vorzugsweise handelt es sich bei den Temperatursensoren 411, 412, 413 und 414 um sogenannte Thermopile-Arrays bzw. um Pyrometer-Arrays, da diese keine mechanisch beweglichen Teile enthalten. Dies ist beispielsweise vorteilhaft in Bezug auf die Robustheit und Langlebigkeit der gesamten Temperaturmessvorrichtung 41 bei der Verwendung im Straßenbaubereich. Jeder der oben beschriebenen Temperatursensoren 411, 412, 413 und 414 hat einen Öffnungswinkel bzw. Blickwinkel von ca. 40°, schematisch in den Figuren dargestellt bzw. angedeutet durch gestrichelte Linien, welche ausgehend von dem jeweiligen Temperatursensor 411, 412, 413 oder 414 in Richtung der Oberfläche des neu eingebauten (asphaltierten) Straßenbelags 22 verlaufend dargestellt sind. Verwendbar sind jedoch auch Temperatursensoren mit einem kleineren oder größeren Öffnungswinkel bzw. Blickwinkel sowie andere Arten und Ausführungen von Temperatursensoren, beispielsweise ein oder mehrere Wärmebildkameras oder dergleichen.

Wird die Temperaturmessvorrichtung 41 beispielsweise in einer Höhe von ca. 3,80 m über der Oberfläche des neu eingebauten (asphaltierten) Straßenbelags 22 am Straßenfertiger 10 angeordnet, so ergibt sich mit den zuvor beschriebenen Ausführungsbeispielen gemäß den Figuren 3a und 3b und einem wie oben angegebenen Öffnungswinkel bzw. Blickwinkel der einzelnen Temperatursensoren 411 bis 414 von ca. 40° eine erfassbare Einbaubreite B von ca. 13 m. Dabei ergibt sich für die äußeren Teilbereiche B1 und B3 jeweils eine durch die Temperatursensoren 411 und 413 erfassbare Breite von ca. 5,15 m und für den mittleren Teilbereich B2 eine durch den Temperatursensor 412 erfassbare Breite von ca. 2,72 m, sodass man in Summe auf die zuvor genannte erfassbare Gesamteinbaubreite B von ca. 13 m kommt. Mit den zuvor beschriebenen Ausführungsbeispielen gemäß Figuren 3c und 3d könnte die erfassbare Gesamteinbaubreite B deutlich breiter sein, sodass auch bei großen Einbaubreiten (beispielsweise beim Autobahnbau) die gesamte Fahrbahnbreite mit einer einzigen Temperaturmessvorrichtung 41 erfasst werden könnte. Dies kann beispielsweise dadurch erreicht werden, indem der Abstand zwischen den einzelnen Temperaturmessvorrichtungen 41a und 41b vergrößert wird oder aber die einzelnen Temperaturmessvorrichtungen 41a und 41b in sich verdreht angeordnet werden, derart, dass die Öffnungswinkel bzw. Blickwinkel der einzelnen Temperatursensoren 411 bis 414 weiter nach außen in Richtung der Straßenrandbereiche zeigen bzw. ausgerichtet sind. Der Messbereich der Temperaturmessvorrichtungen wird dadurch vergrößert.

In Fig. 3c bzw. 3d dargestellt, können sich zwei Sensoren des Arrays, wie hier zum Beispiel die Sensoren 411 und 412 bzw. 413 und 414 überlappen. Das heißt also, dass in dem Überlappbereich (z. B. beim Übergang zwischen B1 und B2 bzw. beim Übergang zwischen B3 und B4) beide Sensoren 411 und 412 bzw. 413 und 414 ein und denselben Messpunkt in ihrem Messfeld haben. Dies ermöglicht, dass sich die zwei Sensoren gegenseitig validieren. Ein hier an diesem Punkt gemessener Temperaturunterschied, obwohl er ja den gleichen Messpunkt bzw. einen sehr nahen Messpunkt im Fokus hat, spiegelt höchstwahrscheinlich nicht die Realität wieder, sondern ist auf unterschiedliche Temperaturmesseigenschaften zurückzuführen. Dieses Abgleichen ermöglicht es, die beiden Temperatursensoren 411 und 412 bzw. 413 und 414 gegenseitig zu validieren bzw. zu korrigieren.

Weitere Ausführungsformen der Temperaturmessvorrichtung sind schematisch in den Figuren 3i und 3j dargestellt. Hierbei umfasst die Temperaturmessvorrichtung 41 jeweils zwei einzelne Temperatursensoren 411 und 412 bzw. 413 und 414 (ähnlich wie die in Figur 3d dargestellten Temperaturmessvorrichtungen 41a bzw. 41b; siehe hierzu auch Figur 3h), welche auf die Oberfläche des neu eingebauten (asphaltierten) Straßenbelags 22 gerichtet sind. Jeder der zwei Temperatursensoren erfasst quer zur Fahrt- bzw. Bewegungsrichtung F,10B des Straßenfertigers 10 gesehen einen Teilbereich B1 bzw. B2 der Gesamteinbaubreite, welche durch die Straßenrandbereiche 22L und 22R begrenzt wird. Dabei geht der erfasste Bereich des Temperatursensors 412 bzw. 414, wie in den Figur 3i und 3j jeweils dargestellt, über den Straßenrandbereich 22L hinaus, d. h. es wird zusätzlich zum Teilbereich B1 noch der Straßenrandbereich miterfasst. Es versteht sich jedoch, dass dies auch für den erfassten Teilbereich B2 des Temperatursensors 411 bzw. 413 zutreffen kann, d. h. dass der erfasste Bereich B2 des Temperatursensors 411 bzw. 413 über den Straßenrandbereich 22R, der in den Figuren 3i und 3j durch eine Asphaltkante gebildet ist, hinausgehen kann.

Die einzelnen Temperatursensoren sind in den Ausführungsformen gemäß Figuren 3i und 3j in einem Winkel $\alpha$ zueinander angeordnet (siehe auch Figur 3h), wobei $\gamma_1$ und $\gamma_2$ die Öffnungswinkel der entsprechenden Temperatursensoren quer zur Fahrt- bzw. Bewegungsrichtung F,10B des Straßenfertigers 10 gesehen darstellen. Der Öffnungswinkel $\gamma$ bzw. die Öffnungswinkel $\gamma_1$ und $\gamma_2$ der Temperatursensoren quer zur Fahrt- bzw. Bewegungsrichtung F des Straßenfertigers 10 gesehen wird jeweils durch Strahlungslinien S11, S12, S21 und S22 angedeutet und somit definiert. Dabei können die Öffnungswinkel $\gamma_1$ und $\gamma_2$ je nach Ausführung der Temperaturmessvorrichtung gleich oder unterschiedlich sein. Die zu erfassenden Teilbereiche B1 und B2 überlappen sich, sodass der Temperatursensor 411 bzw. 413 nicht nur den Teilbereich B2 erfasst, sondern auch einen Teil des Bereichs B1 miterfasst, und der Temperatursensor 412 bzw. 414 nicht nur den Teilbereich B1 erfasst, sondern auch einen Teil des Bereichs B2 miterfasst.

Die Besonderheit der in Figur 3i dargestellten Ausführungsform besteht darin, dass die zu erfassenden Teilbereiche B1 und B2 sich derart überlappen, dass unabhängig von einer Montage- bzw. Anbringungshöhe H bzw. dem Abstand der Temperaturmessvorrichtung 41 von der Oberfläche des neu eingebauten (asphaltierten) Straßenbelags 22 der überlappende Teilbereich BM in seiner Breite quer zur Fahrt- bzw. Bewegungsrichtung F,10B des Straßenfertigers 10 gesehen immer gleich ist. In anderen Worten ausgedrückt erfolgt eine Ausrichtung der Arrays auf einen sich überlappenden Bereich BM der Messfelder derart, dass bei einer Änderung des Abstands der Temperaturmessvorrichtung 41 zur Referenzfläche 22 der von den Arrays (Temperatursensoren) erfasste überlappende Bereich BM der Messfelder in seiner Breite quer zur Fahrt- bzw. Bewegungsrichtung F,10B der Baumaschine 10 gesehen gleich bleibt. Denn, die Strahlungslinien S12 (des Temperatursensors 411 bzw. 413) und S22 (des Temperatursensors 412 bzw. 414) verlaufen parallel zueinander und stehen senkrecht auf der Oberfläche des neu eingebauten (asphaltierten) Straßenbelags 22, d. h. in einem Winkel φ von 90°. Dies ist bei anderen Ausführungsformen meist nicht gegeben, da sich Erfassungsbereiche entweder nicht überlappen oder eine Breite des sich überlappenden Messfelds mit Änderung der Anbringungshöhe bzw. des Abstands der Temperaturmessvorrichtung 41 von der Oberfläche des neu eingebauten (asphaltierten) Straßenbelags 22 ebenfalls ändert, da die Strahlungslinien der Temperatursensoren nicht parallel zueinander verlaufen und somit nicht senkrecht auf der Oberfläche des neu eingebauten (asphaltierten) Straßenbelags 22 stehen, d. h. in einem Winkel φ von ungleich 90°. Auch könnten bei anderen Ausführungsformen sich überlappende Bereiche mit Änderung der Anbringungshöhe bzw. des Abstands der Temperaturmessvorrichtung 41 von der Oberfläche des neu eingebauten (asphaltierten) Straßenbelags 22 auf einmal nicht mehr überlappen.

Dies wird jedoch mit der Ausführungsform gemäß Figur 3i vermieden, was im Hinblick auf eine Validierung der Temperatursensoren vorteilhaft ist. Denn, durch die Ausführungsform gemäß Figur 3i wird ein immer gleich breiter Teilbereich BM und somit ein immer gleich breites Messfeld (quer zur Fahrt- bzw. Bewegungsrichtung F,10B des Straßenfertigers 10 gesehen) von den Temperatursensoren erfasst. Wie schon zu den Ausführungsbeispielen aus Fig. 3c bzw. 3d im Zusammenhang mit einer Validierung von Temperaturmesswerten erläutert, so haben in dem Überlappbereich BM beide Sensoren 411 und 412 bzw. 413 und 414 ein und denselben Messpunkt in ihrem Messfeld. Dies ermöglicht eine gegenseitige Validierung der zwei Sensoren. Denn auch hier spiegelt ein an diesem Punkt gemessener Temperaturunterschied, obwohl er ja den gleichen Messpunkt bzw. einen sehr nahen Messpunkt im Fokus hat, höchstwahrscheinlich nicht die Realität wider, sondern ist auf unterschiedliche Temperaturmesseigenschaften zurückzuführen. Dieses Abgleichen ermöglicht es, die beiden Temperatursensoren 411 und 412 bzw. 413 und 414 gegenseitig zu validieren bzw. zu korrigieren, und zwar unabhängig von der Anbringungshöhe bzw. des Abstands der Temperaturmessvorrichtung 41 von der Oberfläche des neu eingebauten (asphaltierten) Straßenbelags 22.

Die einzelnen Temperatursensoren sind in der Ausführungsform gemäß Figur 3i in einem Winkel α = 180° - (γ$_1$/2 + γ$_2$/2) zueinander angeordnet. Bei einem Öffnungswinkel bzw. Erfassungswinkel γ$_1$ = γ$_2$ = γ (beide Temperatursensoren haben den gleichen Öffnungswinkel bzw. Erfassungswinkel) von beispielsweise 40,8° quer zur Fahrt- bzw. Bewegungsrichtung F,10B des Straßenfertigers 10 gesehen ergibt sich somit ein Winkel α = 180° - (20,4° + 20,4°) = 180° - 40,8° = 132,2°.

Die Besonderheit der in Figur 3j dargestellten Ausführungsform besteht darin, dass die Temperaturmessvorrichtung 41 die Montage- bzw. Anbringungshöhe H selbst bestimmen kann. Dies ist in mehrerer Hinsicht vorteilhaft. Einerseits erfolgt derzeit eine Bestimmung der Montage- bzw. Anbringungshöhe H manuell, d. h. die Montage- bzw. Anbringungshöhe H wird vom Bedienpersonal zunächst gemessen und anschließend in das Messsystem eingegeben, sodass diese Arbeiten in vorteilhafter Weise entfallen könnten und dem Bedienpersonal mehr Zeit bleibt, um sich auf andere Arbeiten rund um den Straßenbauprozess zu kümmern. Auch ist das Messen der Montage- bzw. Anbringungshöhe H durch das Bedienpersonal schwierig, da der Anbringungsort der Temperaturmessvorrichtung 41 für das Bedienpersonal in der Regel schwer zu erreichen ist. Andererseits ist eine von der Temperaturmessvorrichtung 41 selbst durchgeführte Bestimmung der Montage- bzw. Anbringungshöhe H für eine genaue (Fahr-)Geschwindigkeitsbestimmung bzw. (Fahr-)Geschwindigkeitsberechnung von Vorteil, bspw. wenn sich während des Einbaus die Schichtdicke des neu eingebauten (asphaltierten) Straßenbelags 22 ändert. Wie weiter unten noch beschrieben, so ist für eine Bestimmung der (Fahr-)Geschwindigkeit des Straßenfertigers 10 eine Umrechnung der erfassten Temperaturbilder auf ein einheitliches Raster erforderlich. D. h., um eine Verschiebung der Pixel von Temperaturbild zu Temperaturbild auf Meter pro Minute umrechnen zu können, ist es erforderlich, die Projektion der Pixel auf der Oberfläche des neu eingebauten (asphaltierten) Straßenbelags 22 in ein einheitliches Raster zu überführen, damit eine (Fahr-)Geschwindigkeit des Straßenfertigers 10 berechnet werden kann. Hierfür wird ein möglichst genauer Abstand der Temperaturmessvorrichtung 41 zur Oberfläche des neu eingebauten (asphaltierten) Straßenbelags 22 benötigt. Ist die Temperaturmessvorrichtung 41 bspw. am Dach des Straßenfertigers oder an den Dachholmen oder an einem anderen Ort am Straßenfertigerchassis angeordnet, so wird sich bei einer Änderung der Schichtdicke auch der Abstand (und somit auch die Montage- bzw. Anbringungshöhe H) der Temperaturmessvorrichtung 41 zur Oberfläche des neu eingebauten (asphaltierten) Straßenbelags 22 ändern. Eine im Messsystem fest hinterlegte, bspw. durch eine manuelle Eingabe festgelegt, Montage- bzw. Anbringungshöhe H weicht jedoch dann von einer tatsächlichen Montage- bzw. Anbringungshöhe H ab, sodass eine (Fahr-)Geschwindigkeitsbestimmung bzw. (Fahr-)Geschwindigkeitsberechnung ungenau oder fehlerhaft wird. In vorteilhafter Weise erfolgt die Bestimmung der Montage- bzw. Anbringungshöhe H durch die Temperaturmessvorrichtung 41 kontinuierlich oder zumindest in regelmäßigen Abständen.

Eine Bestimmung der Montage- bzw. Anbringungshöhe H durch die Temperaturmessvorrichtung 41 erfolgt dabei folgendermaßen:
Zunächst wird aus den von den Temperatursensoren 411 und 412 bzw. 413 und 414 erfassten Bereichen B1 und B2 der überlappende Teilbereich BM hinsichtlich Breite und Länge (quer zur und in Fahrtrichtung der Maschine) bestimmt. Der sich in der Mitte des überlappenden Teilbereichs BM befindliche Punkt P, d. h. mittig in x- und $\gamma$-Richtung des Bereichs BM gesehen, wird zur weiteren Berechnung herangezogen, d. h. die Pixel-Koordinaten dieses Punktes werden für die weiteren Berechnungen verwendet. Es sei angemerkt, dass der Punkt P auch einen Bereich innerhalb des überlappenden Teilbereichs BM darstellen kann, in welchem eine Wärmeverteilung mit unterschiedlichen Temperaturen vorliegt. Der Punkt P stellt dabei eine Referenz innerhalb des überlappenden Teilbereichs BM dar.

Anhand der Position, welcher der Punkt P sowohl in dem Teilbereich BM als auch in einem der Bereiche B1 und B2 aufweist, können nun die Winkel $\sigma_{11}$ und $\sigma_{21}$ bestimmt werden, d. h. die Winkel zwischen den in Figur 3j eingezeichneten Strahlungslinien S1P bzw. S2P (zwischen den einzelnen Temperatursensoren und dem Punkt P) und der (waagerechten) Oberseite 41h der Temperaturmessvorrichtung 41. Dazu wird jedes der beiden Temperaturbilder, welche die Bereiche B1 und B2 darstellen, analysiert und zwar derart, dass die Pixel-Koordinaten im Temperaturbild ausgewertet werden. Aus der Position des Punktes P zum entsprechenden Bildrand, welcher den Bereich BM begrenzt, und der Gesamtbreite B1 bzw. B2 sowie dem Öffnungswinkel $\gamma_1$ bzw. $\gamma_2$ des jeweiligen Temperatursensors können die Winkel $\sigma_{11}$ und $\sigma_{21}$ berechnet werden.

Aus den Winkeln $\sigma_{11}$ und $\sigma_{21}$ können nun die Winkel $\sigma_{12}$ und $\sigma_{22}$ berechnet werden, wobei man hier im Wesentlichen zwei Fälle betrachten muss. Für den Fall gemäß Figur 3i, bei dem die Strahlungslinien S12 (des Temperatursensors 411 bzw. 413) und S22 (des Temperatursensors 412 bzw. 414) parallel zueinander verlaufen und senkrecht auf der Oberfläche des neu eingebauten (asphaltierten) Straßenbelags 22 stehen (Winkel $\varphi = 90°$), berechnen sich die Winkel $\sigma_{12} = 90° - \sigma_{11}$ und $\sigma_{22} = 90° - \sigma_{21}$. Für den Fall, dass die Winkel $\varphi$ ungleich 90° sind (Strahlungslinien S12 und S22 stehen nicht senkrecht auf der Oberfläche des neu eingebauten (asphaltierten) Straßenbelags 22), sind der Winkel $\alpha$, d. h. die Angabe, in welchem Winkel die einzelnen Temperatursensoren zueinander angeordnet sind, und die Öffnungswinkel der Temperatursensoren $\gamma_1$ und $\gamma_2$ zu berücksichtigen. Es ergibt sich dann für die Winkel $\sigma_{12} =$

$(\alpha/2 + \gamma_1/2) - \sigma_{11}$ und $\sigma_{22} = (\alpha/2 + \gamma_2/2) - \sigma_{21}$.

Mithilfe der Winkel $\sigma_{12}$ und $\sigma_{22}$ sowie dem Abstand D zwischen den Temperatursensoren, welcher sich aus der mechanischen Konstruktion der Temperaturmessvorrichtung 41 ergibt und vorzugsweise als fester Wert im Messsystem eingespeichert werden kann, berechnet sich die Montage- bzw. Anbringungshöhe H der Temperaturmessvorrichtung 41 wie folgt:

$$ H = D \cdot \left( \frac{\sin(\sigma_{12}) \cdot \sin(\sigma_{22})}{\sin(180° - \sigma_{12} - \sigma_{22})} \right) $$

Alternativ zu der Bestimmung der Montagebzw. Anbringungshöhe H durch die Temperaturmessvorrichtung 41 kann auch ein zusätzlicher (in den Figuren nicht dargestellter) Abstandssensor verwendet werden, bspw. ein Radarsensor, Ultraschallsensor oder Laserdistanzsensor, welcher an der Temperaturmessvorrichtung 41 oder am Träger 44 angeordnet ist und den Abstand zur Oberfläche des neu eingebauten (asphaltierten) Straßenbelags 22 misst.

Im Hinblick auf eine wie oben beschriebene Positionsbestimmung des in der Mitte des überlappenden Teilbereichs BM befindlichen Punktes P sowie die darauffolgenden Berechnungen der Montage- bzw. Anbringungshöhe H kann es weiterhin von Vorteil sein, wenn eine Neigung der Temperaturmessvorrichtung 41 gemessen werden kann, da die Temperaturmessvorrichtung 41 montagebedingt nicht immer im Lot am Straßenfertiger 10 angebracht sein kann. In anderen Worten gesagt weist die Temperaturmessvorrichtung 41 montagebedingt meist eine Neigung auf, die bei einer genauen Berechnung der Montage- bzw. Anbringungshöhe H berücksichtigt werden sollte. Die Neigung kann dabei entweder vorab von dem Bedienpersonal gemessen und in das Messsystem eingegeben werden, oder aber die Neigung wird mittels eines Neigungssensors, der an oder im Gehäuse der Temperaturmessvorrichtung 41 angeordnet ist, erfasst, wobei der Neigungssensor dann mit der Verarbeitungseinheit 410 und/oder mit der Prozessrechnereinheit bzw. Auswertungseinrichtung 43 elektrisch verbunden ist, welche die Neigungssensorsignale empfangen und entsprechend auswerten können, d. h. die Neigungssensorsignale werden dann bei der oben beschriebenen Temperaturbildanalyse bzw. Temperaturbildauswertung sowie den darauffolgenden Berechnungen für die Montage- bzw. Anbringungshöhe H berücksichtigt bzw. mit eingerechnet. In vorteilhafter Weise wird ein ein- oder zweiachsiger Neigungssensor verwendet, um die Längsneigung und/oder Querneigung der Temperaturmessvorrichtung 41 zu messen. Zusätzlich zu der Neigung der Temperaturmessvorrichtung 41 kann noch die Neigung des Straßenfertiger(chassis) gemessen werden, da sich dieser je nach Beschaffenheit des zu asphaltierenden Untergrunds, auf dem sich der Straßenfertiger 10 während des Einbaus bewegt, ebenfalls neigt, was somit einen Einfluss auf die wie oben beschriebene Positionsbestimmung des in der Mitte des überlappenden Teilbereichs BM befindlichen Punktes P sowie die darauffolgenden Berechnungen der Montage- bzw. Anbringungshöhe H hat. Die Neigung des Straßenfertigers 10 während des Einbaus kann dabei mittels eines Neigungssensors, der an dem Straßenfertiger(chassis) angeordnet ist, erfasst werden, wobei der Neigungssensor dann mit der Verarbeitungseinheit 410 und/oder mit der Prozessrechnereinheit bzw. Auswertungseinrichtung 43 elektrisch verbunden sein kann, welche die Neigungssensorsignale empfangen und entsprechend auswerten können. Beispielsweise kann mittels dieser Neigungssensorsignale eine gemessene Neigung der Temperaturmessvorrichtung 41 korrigiert werden, da diese sich bei einer Neigung des Straßenfertiger(chassis) folglich auch ändert.

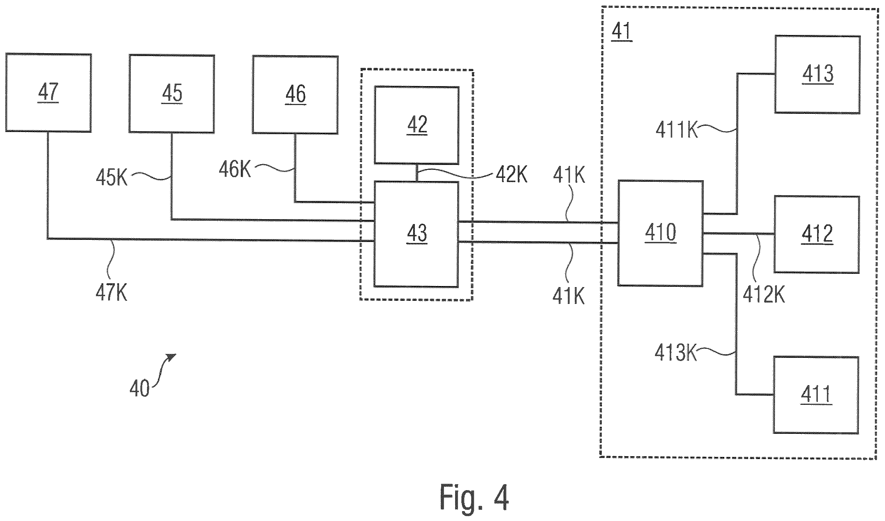

In Figur 4 ist schematisch das Temperaturerfassungssystem 40 dargestellt. Die Temperaturmessvorrichtung 41 umfasst (wie auch schon in den Figuren 3a und 3b gezeigt) drei einzelne Temperatursensoren 411, 412 und 413, welche über Kabelverbindungen 411K, 412K und 413K elektrisch mit einer Verarbeitungseinheit 410 verbunden sind. Denkbar ist es hierbei jedoch auch, dass die Temperaturmessvorrichtung 41 weitere (einen oder mehrere) Temperatursensoren umfasst (wie beispielsweise in Figur 3c oder 3d gezeigt), welche dann ebenfalls mit der Verarbeitungseinheit 410 entsprechend elektrisch verbunden sind. Denkbar ist es hierbei allerdings auch, dass die Temperaturmessvorrichtung 41 nur einen oder zwei Temperatursensoren umfasst. Die Verarbeitungseinheit 410 verarbeitet im Wesentlichen die von den Temperatursensoren 411, 412 und 413 (und ggf. weiteren Temperatursensoren) gemessenen Daten, welche dann für die weitere Auswertung über eine oder mehrere Kabelverbindungen 41K zu der Prozessrechnereinheit/Auswertungseinrichtung 43 übertragen werden. Ferner dient die Verarbeitungseinheit 410 beispielsweise dazu, die einzelnen Temperatursensoren zu konfigurieren und die Messungen zu starten.

Dabei ist es auch denkbar, dass Temperaturbildanalysen bzw. Temperaturbildauswertungen sowie Berechnungen in der Temperaturmessvorrichtung 41 selbst, insbesondere in der Verarbeitungseinheit 410 erfolgen bzw. durchgeführt werden können, wie beispielsweise die zu den Figuren 3i und 3j beschriebenen Berechnungen.

Wie oben bereits beschrieben, so ist es auch denkbar, dass die Prozessrechnereinheit/Auswertungseinrichtung 43 oder zumindest ein Teil davon in der Temperaturmessvorrichtung 41, insbesondere in der Verarbeitungseinheit 410 integriert ist, um beispielsweise Temperaturbilder zu analysieren oder eine Temperaturbildauswertung vorzunehmen oder auch Berechnungen durchzuführen, wie beispielsweise die zu den Figuren 3i und 3j beschriebenen Berechnungen.

Wie oben bereits beschrieben, so ist die Prozessrechnereinheit bzw. Auswertungseinrichtung 43 mit der Anzeige- und Bedienvorrichtung 42 über eine Kabelverbindung 42K elektrisch verbunden, welche als sogenanntes Mensch-Maschine-Interface (MMI) dient. Einem Bediener, beispielsweise dem Bohlenpersonal, werden mittels der Anzeige- und Bedienvorrichtung 42 beispielsweise die gemessenen Temperaturdaten in Form eines farblichen Verlaufs angezeigt, womit das Profil der gemessenen Temperaturen über die gesamte Einbaubreite B während des Einbaus überwacht werden kann. Mit der Prozessrechnereinheit / Auswertungseinrichtung 43 sind des Weiteren noch die bereits beschriebenen Komponenten 45 (Kommunikationsvorrichtung), 46 (Wetterstation) und 47 (Positionsbestimmungseinrichtung) über entsprechende Kabelverbindungen 45K, 46K und 47K elektrisch verbunden, um - wie bereits oben beschrieben - beispielsweise Positionsdaten mittels der Positionsbestimmungseinrichtung 47 zu empfangen und auf der Anzeige- und Bedienvorrichtung 42 anzuzeigen oder gemessene Temperaturdaten mit Positionsdaten zu verknüpfen, um diese in der Prozessrechnereinheit bzw. Auswertungseinrichtung 43 abzuspeichern.

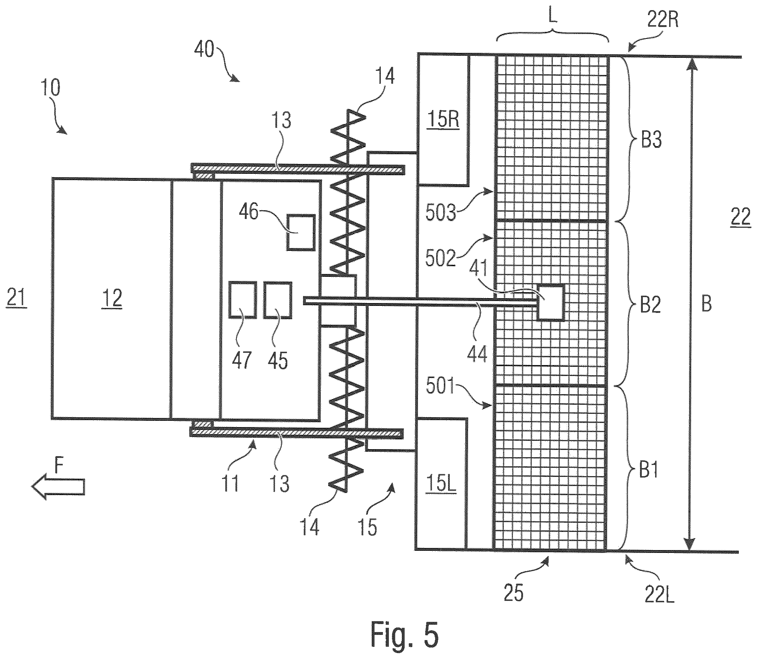

Figur 5 zeigt schematisch den in Figur 2b bereits dargestellten selbstfahrenden Straßenfertiger 10 in der Draufsicht, d. h. mit Blick von oben. Der Erfassungsbereich 25, welcher sich quer zur Fahrtrichtung F des Straßenfertigers 10 gesehen über die gesamte Einbaubreite B sowie in Fahrtrichtung F des Straßenfertigers 10 gesehen über eine Länge L erstreckt, ist in drei einzelne Bereiche 501, 502 und 503 aufgeteilt dargestellt. Die drei Erfassungsbereiche sind den drei zuvor beschriebenen und in den Figuren 3a, 3b und 4 gezeigten Temperatursensoren 411, 412 und 413 entsprechend zugeordnet, d. h. auf dem neu eingebauten Straßenbelag 22 erfasst der Temperatursensor 411 die Temperaturen im Bereich 501, der Temperatursensor 412 die Temperaturen im Bereich 502 und der Temperatursensor 413 die Temperaturen im Bereich 503. Die drei Erfassungsbereiche 501, 502 und 503 sind schematisch in ein Raster unterteilt, welches zeigen soll, dass die Temperatursensoren 411, 412 und 413 eine Pixel-Matrix aufweisen, wie es beispielsweise bei Thermopile-Arrays oder auch Pyrometer-Arrays der Fall ist. Die drei einzelnen Temperatursensoren 411, 412 und 413 können beispielsweise eine Pixel-Matrix von je 80 x 64 Pixel aufweisen, d. h. 80 Pixel quer zur Fahrtrichtung F des Straßenfertigers 10 gesehen und 64 Pixel in Fahrtrichtung F des Straßenfertigers 10 gesehen über eine Länge L, sodass der Erfassungsbereich 25 (Fläche B x L) mit insgesamt 240 x 64 Pixel abgetastet wird. Derartige am Markt verfügbare Temperatursensoren (Thermopile-Arrays) weisen einen Öffnungswinkel bzw. Erfassungswinkel von beispielsweise ca. 40,8° x 32,8° auf, d. h. 40,8° quer zur Fahrtrichtung F des Straßenfertigers 10 gesehen und 32,8° in Fahrtrichtung F des Straßenfertigers 10 gesehen, sodass sich, wie oben bereits zu den Figuren 3a bis 3c beschrieben, bei einer Anbringungshöhe der Temperaturmessvorrichtung 41 von beispielsweise ca. 3,80 m über der Oberfläche des neu eingebauten (asphaltierten) Straßenbelags 22 eine erfassbare Einbaubreite B von ca. 13 m ergibt. Denkbar sind in diesem Zusammenhang auch andere Matrix-Auflösungen (bspw. 120 x 84 Pixel) sowie andere Öffnungswinkel bzw. Erfassungswinkel. Durch eine am Temperatursensor 411, 412 und/oder 413 vorgesetzte Optik wäre es zudem möglich, ein weitestgehend verzerrungsfreies Wärmebild zu erfassen. Auch wäre eine entsprechende Beschichtung der Optik bzw. der Linse denkbar, welche bewirkt, dass der Temperatursensor nur Wärmestrahlung aufnimmt.

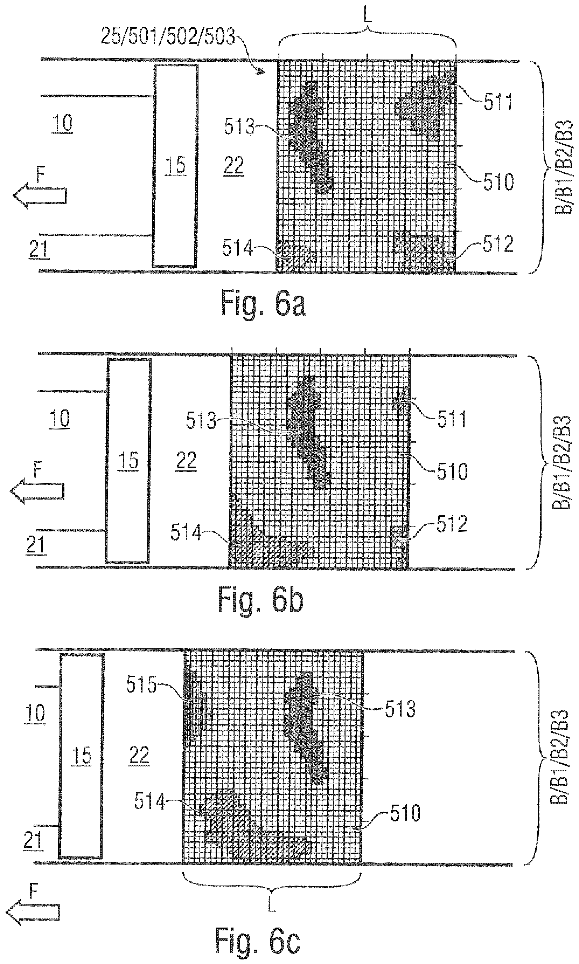

Die Figuren 6a bis 6c zeigen schematisch einen selbstfahrenden Straßenfertiger 10 in der Draufsicht, mit einer Einbaubohle 15. Vereinfacht dargestellt sind in den Figuren einer der drei Erfassungsbereiche 501, 502 und 503 bzw. der Erfassungsbereich 25 selbst, und zwar als Pixel-Matrix mit einer Auflösung von 32 x 40 Pixel, d. h. 32 Pixel in Fahrtrichtung F des Straßenfertigers 10 gesehen und 40 Pixel quer zur Fahrtrichtung F des Straßenfertigers 10 gesehen über eine Länge L. Während des Materialeinbaus bewegt sich der Straßenfertiger 10 in Fahrtrichtung F auf einer Oberfläche des zu asphaltierenden Untergrunds 21. Mit der gleichen Geschwindigkeit wie der Straßenfertiger 10 bewegen sich auch die drei Erfassungsbereiche 501, 502 oder 503 bzw. der Erfassungsbereich 25. Das heißt, die Temperaturmessvorrichtung 41 und somit auch die Erfassungsbereiche "wandern" während des Materialeinbaus mit der gleichen Geschwindigkeit wie der Straßenfertiger 10 in dessen Fahrtrichtung F, wobei die Temperaturmessvorrichtung 41 (in den Figuren 6 nicht dargestellt) kontinuierlich Temperaturwerte der Oberfläche des neu eingebauten (asphaltierten) Straßenbelags 22 misst bzw. erfasst.

Wie in den Figuren 6a bis 6c dargestellt, so bestehen die gemessenen Temperaturbilder aus verschiedenen Temperaturbereichen 510 bis 515, wobei der Einfachheit halber die dargestellten Temperaturbilder jeweils einen Versatz von 8 Pixel zueinander in Fahrtrichtung F des Straßenfertigers 10 haben. Die verschiedenen Temperaturbereiche 510 bis 515 weisen voneinander unterschiedliche Temperaturen auf. Ausgehend von dem Temperaturbereich 510, welcher eine Asphalttemperatur von beispielsweise 160 °C aufweist, können die anderen Temperaturbereiche 511 bis 515 einen größeren oder kleineren Temperaturunterschied hierzu aufweisen, beispielweise einen Unterschied im Bereich von +/- 2 °C, +/- 5 °C oder größer. Die beispielhaft dargestellten Bereiche 510 bis 515 zeigen somit ein Temperaturprofil quer zur Fahrtrichtung F des Straßenfertigers 10 gesehen sowie in Fahrtrichtung F des Straßenfertigers 10 gesehen. Aus diesem Temperaturprofil, welches während des Materialeinbaus kontinuierlich aufgenommen und von der Temperaturmessvorrichtung 41 zudem kontinuierlich an die Prozessrechnereinheit bzw. Auswertungseinrichtung 43 übertragen wird, kann dann von der Prozessrechnereinheit bzw. Auswertungseinrichtung 43 durch Vergleich der Aufnahmen eine (Fahr-)Geschwindigkeit des Straßenfertigers 10 sowie auch eine zurückgelegte Wegstrecke berechnet werden. Ferner kann von der Prozessrechnereinheit bzw. Auswertungseinrichtung 43 durch Vergleich der Aufnahmen ein "Stehenbleiben" und ein "Anfahren" des Straßenfertigers 10 ermittelt bzw. detektiert werden. Eine (Fahr-)Geschwindigkeitsbestimmung ist möglich, da mittels der verwendeten Thermopile-Arrays bzw. Pyrometer-Arrays mehrere Zeilen erfasst werden können und somit zwei nacheinander erfasste Aufnahmen miteinander verglichen werden können. Mithilfe der zeitlichen Differenz können dann eine Geschwindigkeit des Straßenfertigers 10 sowie die weiteren Bewegungsparameter bestimmt werden.

Eine (Fahr-)Geschwindigkeit des Straßenfertigers 10 kann beispielsweise mit dem Verfahren des optischen Flusses berechnet werden, welcher für jeden Bildpunkt in einem Bild einer Bildfolge dessen Position im darauffolgenden Bild der Bildfolge beschreibt (anhand von Änderungen von Helligkeiten zwischen einzelnen Bildpunkten). Dieses Verfahren beruht auf der Horn-Schunck-Methode, ein von Berthold K. P. Horn und Brian G. Schunck entwickelter Algorithmus zur Ermittlung von Bewegungsinformationen aus einer Bildsequenz. Mit der Horn-Schunck-Methode lassen sich auch Bewegungs- bzw. Geschwindigkeitsinformationen aus Temperaturbildern ermitteln. Für eine Geschwindigkeitsberechnung liefert der Algorithmus eine auf Wärmeänderung beruhende Verschiebung in x- sowie in y-Richtung, d. h. in Fahrtrichtung F des Straßenfertigers 10 sowie quer zur Fahrtrichtung F des Straßenfertigers 10 gesehen. Im vorliegenden Fall bedeutet eine Verwendung des Verfahrens des optischen Flusses eine Änderung von Temperaturwerten in den einzelnen Temperaturbildern. Um die (Fahr-)Geschwindigkeit des Straßenfertigers 10 von der Verschiebung in Pixeln von Temperaturbild zu Temperaturbild auf Meter pro Sekunde umrechnen zu können, ist eine Umrechnung der Bilder auf ein einheitliches Raster erforderlich. Mit diesem kann dann auf die zurückgelegte Wegstrecke geschlossen und über die zeitliche Differenz der aufeinanderfolgenden Temperaturbilder die (Fahr-)Geschwindigkeit des Stra-ßenfertigers 10 in Meter pro Sekunde bestimmt werden. Hieraus kann auch festgestellt werden, ob der Straßenfertiger 10 sich bewegt oder nicht, also ein "Stehenbleiben" und ein "Anfahren" des Straßenfertigers 10 ermittelt bzw. detektiert werden.

Denkbar wäre es in diesem Zusammenhang auch, dass die Prozessrechnereinheit bzw. Auswertungseinrichtung 43 Positionsdaten der Maschine 10 (von der Positionsbestimmungseinrichtung 47, beispielsweise GNSS/GPS) nutzt, um beispielsweise in vorbestimmten Abständen die zurückgelegte Wegstrecke, welche aus den Temperaturbildern berechnet wurde, zu korrigieren.

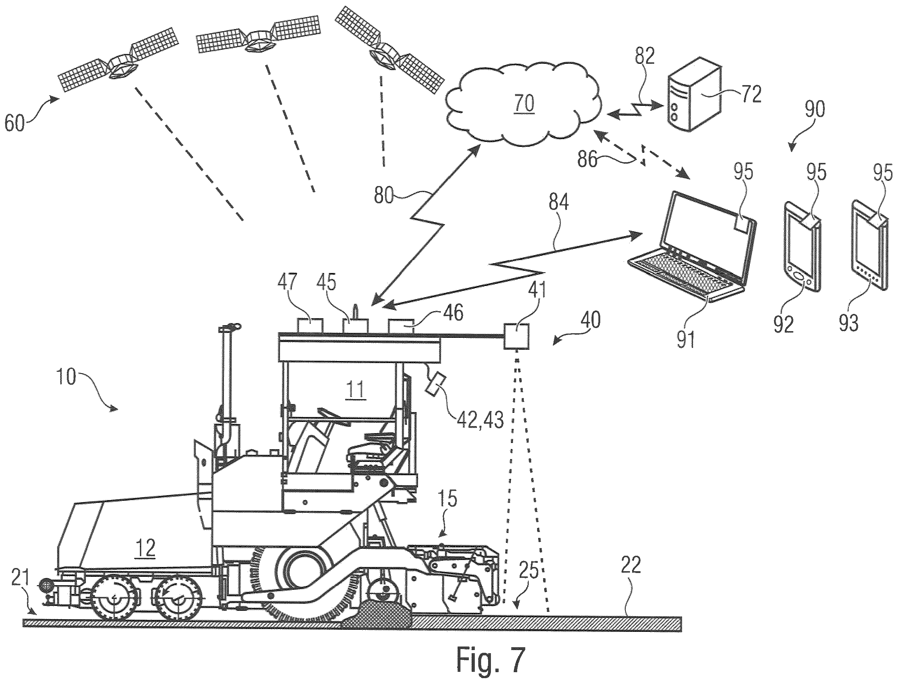

Figur 7 zeigt schematisch den selbstfahrenden Straßenfertiger 10 mit dem bereits beschriebenen Temperaturerfassungssystem 40. Über die Kommunikationsvorrichtung 45 ist das an dem Straßenfertiger 10 angeordnete Temperaturerfassungssystem 40 in der Lage, Daten mit einem entfernt stehenden Datenserver 72 und/oder einem mobilen Endgerät 90 drahtlos auszutauschen, d.h. Daten zu den genannten Geräten 72 und 90 drahtlos zu senden sowie Daten von diesen Geräten 72 und 90 drahtlos zu empfangen. Das mobile Endgerät 90 kann beispielsweise ein Laptop-Computer 91 oder ein Smartphone 92 oder ein Tablet-PC 93 oder dergleichen sein, wobei das mobile Gerät 90 eine Kommunikationsvorrichtung 95 aufweist, um über entsprechende drahtlose Verbindungsarten wie WLAN, Bluetooth etc. kommunizieren zu können.

Beispielsweise können über eine Verbindung 80 oder 84 Daten, wie beispielsweise gemessene Temperaturmesswerte und/oder Daten angebend die Position der Maschine 10 an das mobile Gerät 90 oder über ein Netzwerk 70 an den Datenserver 72 zu Protokollierungs-, Berechnungs- oder Auswertungszwecken gesendet werden. Dadurch hat ein Maschinenbediener oder Baustellenleiter stets einen Überblick über den Einbauvorgang und kann im Falle von auftretenden Problemen wie beispielsweise eine gemessene Temperatur, welche außerhalb eines definierten Bereichs liegt, sofort reagieren. Auch kann ein entfernt stehender Baustellenleiter erkennen, ob ein kontinuierlicher Einbauvorgang mit in etwa gleichbleibender Einbaugeschwindigkeit vorliegt oder ob es des Öfteren zu einem "Stehenbleiben" und "Anfahren" des Fertigers 10 kommt. Weiterhin können über die Verbindung 80, 82, 84 und/oder 86 Daten von dem mobilen Gerät 90 auch an das Temperaturerfassungssystem 40 am Straßenfertiger 10 oder zum Datenserver 72 gesendet werden, um beispielsweise Berechnungsparameter des Berechnungsalgorithmus einzustellen oder um Daten das Temperaturerfassungssystem 40 betreffend auf dem Datenserver 72 abzulegen. Denkbar ist es in diesem Zusammenhang auch, dass Berechnungen des Temperaturerfassungssystems 40 während des Asphalteinbaus nicht (nur) in der Prozessrechnereinheit bzw. Auswertungseinrichtung 43 durchgeführt werden, sondern (auch) auf dem Datenserver 72, wobei hierfür eine kontinuierlich vorhandene Daten- bzw. Kommunikationsverbindung zwischen der Prozessrechnereinheit bzw. Auswertungseinrichtung 43 auf dem Straßenfertiger 10 und dem Datenserver 72 Voraussetzung ist. Auch zu Fernwartungszwecken sind die Kommunikationsvorrichtung 45, die Kommunikationsverbindungen 80, 82, 84 und 86 sowie die mobilen Geräte 90 geeignet, um beispielsweise aus der Ferne einen Status des Temperaturerfassungssystems 40 abzurufen und/oder einen auftretenden Fehler des Temperaturerfassungssystems 40 zu detektieren und beheben zu können.

Bezugnehmend aus dem Ausführungsbeispiel aus Fig. 2 sei angemerkt, dass hier immer davon ausgegangen wird, dass die Temperaturmessvorrichtung 41 ein Messfeld bzw. Messbereich 25 der Temperaturmessvorrichtung 41 hat, der sich hinter der Bohle 15 befindet. Entsprechend weiteren Ausführungsbeispielen können alternativ oder additiv auch eine oder mehrere Temperaturmessvorrichtungen vorgesehen sein, die auf den Bereich vor der Bohle, insbesondere auf den Bereich vor dem Straßenfertiger, oder auch auf die Bereiche seitlich des Straßenfertigers oder der Bohle ausgerichtet ist.

Bei den Ausführungsbeispielen wird davon ausgegangen, dass die Auswertevorrichtung ein Bewegungsparameter bestimmt. Ein möglicher Bewegungsparameter ist die Bewegungsrichtung, z. B. entlang der Bewegungsachse 10B. Der Straßenfertiger ist allerdings auch ausgebildet, um sich senkrecht zur der Bewegungsrichtung 10B zu bewegen, z. B. durch Lenkung des Straßenfertigers. Dies ist wichtig, um den Straßenfertiger dem gewünschten Straßenverlauf nachzuführen. Ein weiterer Bewegungsparameter, der senkrecht zu der Bewegungsrichtung 10B wichtig ist, ist die relative Stellung des Werkzeugs gegenüber dem Untergrund. Die Bohle ist beispielsweise seitlich verschiebbar bzw. nach links und rechts ausfahrbar. Es können beispielsweise ausfahrbare Teile der Bohle nach links und rechts verschoben werden, um den Straßenbelag entsprechend den Rändern nachzuführen bzw. die Straßenbreite anzupassen. Hierfür wäre sinnvoll, wenn auch Bewegungsparameter senkrecht zur Bewegungsrichtung 10B erkannt werden, also eine relative Position zum Rand. Wenn man entsprechend Ausführungsbeispielen davon ausgeht, dass die Temperaturmessvorrichtung eine Perspektive hinter der Bohle einnimmt, kann anhand des Kalt-Warm-Übergangs (größer 40°C oder größer 80°C) erkannt werden, wo sich der Kantenverlauf des heißen Asphalts erstreckt. Insofern kann der Bewegungsparameter eine Kante bzw. einen Vektor einer Kante darstellen, der den Kantenverlauf des aufgebrachten Asphalts darstellt. Ausgehend von diesem Bewegungsparameter ist ein Nachregeln, z. B. der Breite und/oder der Position denkbar. Entsprechend einem weiteren Ausführungsbeispiel kann, wie bereits angedeutet, das Array auch vor dem Straßenfertiger ausgerichtet sein. Bei einer einzigen einzubauenden Fahrbahn wird der Untergrund keine großen Temperaturdifferenzen haben. Wenn man aber davon ausgeht, dass nähere Asphaltschichten nebeneinander eingebaut sind, so ist von der vormals eingebauten noch warmen Asphaltschicht gegenüber dem nicht vorgeheizten Untergrund ein Warm-Kalt-Übergang detektierbar. Diese Kante kann in analoger Weise erkannt werden, so dass es möglich ist, das Werkzeug, wie zum Beispiel die ausfahrbaren Teile der Bohle, entsprechend nachzuführen bzw. sogar das Fahrzeug entsprechend zu lenken. Bei mehreren nebeneinander angeordneten Asphaltbahnen kann die Kante auch gut dokumentiert werden, da hier senkrecht zu der Bewegungsrichtung 10B ein Warm-Heiß-Übergang (größer 3°, größer 10°, größer 20° oder größer 50°) durch die Temperaturmessvorrichtung, die hinter die Bohle ausgerichtet ist, erkennbar ist.

Bezüglich der obigen Ausführungsbeispiele sei darauf hingewiesen, dass ein unterschiedlicher Bewegungsstatus, wie z. B. der Zustand "angehalten", "stehend" oder "wieder losgefahren", erkannt werden kann. Beim Zustand "angehalten" wäre es beispielsweise auch denkbar, dass aufgrund der Zeitdauer ein Abkühlprozess im Asphalt stattfindet, wobei dann die Auswertevorrichtung diese Temperaturänderung nicht als Verschiebung, sondern als Abkühlprozess identifiziert. Dies könnte beispielsweise dadurch erfolgen, dass in der Auswertevorrichtung 43 erkannt wird, dass sich alle Bereiche im aktuellen Frame gleichsam abkühlen.

Bezüglich der Definition der Temperaturzone sei angemerkt, dass diese im Regelfall eine über die Fläche (Pixel) annähernd gleichbleibende Temperatur aufweist, die beispielsweise durch eine obere und eine untere Schwelle definiert ist. Die Differenz zwischen der oberen und unteren Schwelle kann beispielsweise 0,1 Kelvin, 0,5 Kelvin oder 3 Kelvin oder auch ein beliebiges Fenster umfassen. Einige Temperaturzonen bilden sich als Spots aus, die von anderen Temperaturzonen umgeben wird. Die Auswertung der Bewegungsparameter erfolgt vorzugsweise an klar definierten Bereichen, wie z. B. dem Zentrum einer Temperaturzone bzw. dem Zentrum eines Spots oder den Grenzen der jeweiligen Temperaturzone.

Im Zusammenhang mit dem Ausführungsbeispiel aus Fig. 3c bzw. 3d wurde bereits eine Validierung von Temperaturmesswerten erläutert. Diese Validierung kann auch anders erfolgen. Beispielsweise kann in dem Temperaturmessfeld sich ein Maschinenteil, wie zum Beispiel eine Trittstufe oder ein zusätzliches Referenzobjekt befinden, von welchem auszugehen ist, dass die Temperatur bekannt ist. Bei der Trittstufe kann in einer ersten Näherung beispielsweise die Umgebungstemperatur oder auch die Temperatur der Bohle angenommen werden. Je nachdem wo die Trittstufe sich befindet, z. B. an einer Bohle oder an einem Chassis, sind unterschiedliche Temperaturannahmen zu treffen, da ja das Chassis wesentlich weniger Temperaturveränderungen im laufenden Betrieb unterliegt als die Bohle. Entsprechend weiteren Ausführungsbeispielen wäre es auch denkbar, dass ein Element, dessen Temperatur mit einem Sensor überwacht wird, vorgesehen wird. Entweder kann ein Maschinenteil überwacht werden oder in die Perspektive des Sensors ein Objekt positioniert werden, deren Temperatur bekannt ist. Das Objekt kann entweder sehr nah oder auch mit einigem Abstand zu dem entsprechenden Sensor angeordnet sein.

Auch wenn bei obigen Ausführungsbeispielen immer davon ausgegangen wurde, dass diese als Vorrichtung implementiert sind, sei an dieser Stelle darauf hingewiesen, dass viele dieser Verfahrensschritte in Software, d. h. also als Software-implementiertes Verfahren ausgeführt sein kann. Das entsprechende Verfahren umfasst also die Schritte des Erfassens einer ersten und einer zweiten Oberflächentemperatur für zwei unterschiedliche (lokale) Bereiche eines Messfelds. Bei einer Bewegung der Baumaschine erfolgt eine Verschiebung des Messfelds, so dass sich eine Temperaturzone, definiert durch eine Oberflächentemperatur in einem Bereich, z. B. in einem ersten Bereich, ebenfalls verschiebt. Diese Temperaturverschiebung kann über die Zeit "getrackt" werden. Somit ergeben sich also die Basisschritte des Bestimmens der zwei Oberflächentemperaturen sowie des Bestimmens der Verschiebung, um hieraus einen Bewegungsparameter abzuleiten. Ein optionaler Schritt kann das Identifizieren einer Temperaturzone umfassen. Die Identifikation erfolgt zu einem ersten Zeitpunkt, zu welchem auch diese Temperaturzone definiert wird. Zu weiteren Zeitpunkten wird ebenfalls die Temperaturzone identifiziert, aber nicht mehr neu definiert. Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Bezugszeichenliste

| | |
|---|---|
| 10 | Straßenfertiger |
| 10B | Bewegung / Bewegungsrichtung / Bewegungsachse / Fahrtrichtung |
| 11 | Fahrerstand |
| 12 | Materialbunker |
| 13 | Zugarm |
| 14 | Verteilerschnecke |
| 15 | Einbaubohle |
| 15L, 15R | Ausziehelemente der Einbaubohle |
| 21 | Oberfläche des zu asphaltierenden Untergrunds |
| 22 | Oberfläche neu asphaltierter Straßenbelag (Referenzfläche) |
| 22_1,22_1',22_2 | Bereiche, Temperaturzone |
| 22L,22R | Seitliche Begrenzung der Oberfläche des neu asphaltierten Straßenbelags |
| 25 | Erfassungsbereich Temperaturmessung |
| 30 | Straßenbelagsmaterial |
| 40 | Temperaturerfassungssystem |
| 41 | Temperaturmessvorrichtung |
| 41m,41m' | Messfeld |
| 41a,b | Temperaturmessvorrichtungen |
| 41h | Oberseite |
| 41K | Kabelverbindung(en) |
| 410 | Verarbeitungseinheit Temperatursensoren |
| 411-414 | Temperatursensoren |
| 411K,412K,413K | Kabelverbindungen |
| 42 | Bedien- und Anzeigevorrichtung |
| 42K | Kabelverbindung |

| | |
|---|---|
| 43 | Prozessrechnereinheit / Auswertungseinrichtung |
| 44 | Träger / Halterung |
| 45 | Kommunikationsvorrichtung |
| 46 | Wetterstation |
| 47 | Positionsbestimmungseinrichtung (GNSS, GPS oder dergleichen) |
| 45K,46K,47K | Kabelverbindungen |
| 501-503 | Erfassungsbereiche Temperatursensoren |
| 510-515 | Temperaturbereiche |
| 60 | Positionssystem (GNSS, GPS oder dergleichen) |
| 70 | Netzwerk |
| 72 | Datenserver |
| 80,82,84,86 | Kommunikationsverbindungen |
| 90 | Mobiles Gerät |
| 91,92,93 | Mobiles Gerät (Laptop, Smartphone oder dergleichen) |
| 95 | Kommunikationsvorrichtung |
| F | Fahrtrichtung Straßenfertiger |
| B | Gesamtbreite neu asphaltierter Straßenbelag |
| B1-B4,BM | Teilbereiche Breite neu asphaltierter Straßenbelag |
| L | Länge des Erfassungsbereichs der Temperaturmessung |
| t1,t2 | Zeitpunkte |
| $\alpha,\beta,\gamma,\varphi,\sigma$ | Winkel |
| S11,S12, S21,S22 | Strahlungslinien |
| H | Montage- und Anbringungshöhe, Abstand |
| D | Abstand |
| P | Messpunkt |
| S1P,S2P | Strahlungslinien |

## Patentansprüche

**1.** Messsystem (1) für eine Baumaschine (10), insbesondere eine Straßenbaumaschine (10), mit folgenden Merkmalen:

Temperaturmessvorrichtung (41), die ausgebildet ist, um eine erste Oberflächentemperatur für einen ersten Bereich (22_1) eines Messfelds (41m, 41m') der Temperaturmessvorrichtung (41) sowie eine zweite Oberflächentemperatur für einen zweiten Bereich (22_2) des Messfelds (41m, 41m') der Temperaturmessvorrichtung (41) zu ermitteln, wobei die Temperaturmessvorrichtung (41) auf eine Referenzfläche (22), gegenüber welcher die Baumaschine (10) sich bewegt, ausgerichtet ist und das Messfeld (41m, 41m') der Temperaturmessvorrichtung (41) in Abhängigkeit von einer Bewegung (10B) der Baumaschine (10) entlang der Referenzfläche (22) verschoben wird; und

Auswertevorrichtung (43), die ausgebildet ist, anhand einer Verschiebung einer ersten Temperaturzone (22_1, 22_1'), definiert für einen ersten Zeitpunkt (t1) durch die erste Oberflächentemperatur im ersten Bereich (22_1), relativ zu dem ersten und/oder zweiten Bereich (22_2) oder relativ zu dem Messfeld (41m, 41m') der Temperaturmessvorrichtung (41) einen Bewegungsparameter zu bestimmen.

**2.** Messsystem (1) gemäß Anspruch 1, wobei die Auswertevorrichtung (43) ausgebildet ist, einen Bewegungsparameter anhand einer auf Wärmeänderung oder anhand einer sich ändernden Wärmeverteilung beruhenden Verschiebung der ersten Temperaturzone (22_1, 22_1') über den ersten und/oder zweiten Bereich (22_1, 22_2) zu erkennen.

**3.** Messsystem (1) gemäß einem der vorherigen Ansprüche, wobei die Verschiebung entlang einer Bewegungsrichtung (10B) der Baumaschine (10) infolge der Bewegung (10B) der Baumaschine (10) erfolgt.

**4.** Messsystem (1) gemäß einem der vorherigen Ansprüche, wobei der Bewegungsparameter eine Geschwindigkeit der Baumaschine (10) und/oder eine zurückgelegte Strecke der Baumaschine (10) beschreibt.

**5.** Messsystem (1) gemäß einem der vorherigen Ansprüche, wobei die Auswertevorrichtung (43) ausgebildet ist, eine Verschiebungsstrecke des ersten Temperaturzone in Relation zu der Zeit zu setzen, um eine Geschwindigkeit der Baumaschine (10) und/oder eine Bewegung der Baumaschine (10) und/oder den Bewegungsparameter zu bestimmen.

**6.** Messsystem (1) gemäß einem der vorherigen Ansprüche, wobei die Auswertevorrichtung (43) ausgebildet ist, anhand der ersten Oberflächentemperatur eine Temperaturzone zu identifizieren und die Verschiebung der ersten Temperaturzone relativ zu dem ersten und/oder zweiten Bereich (22_2) oder relativ zu dem Messfeld der Temperaturmessvorrichtung (41) zu erkennen.

**7.** Messsystem (1) gemäß einem der vorherigen Ansprüche, wobei die Auswertevorrichtung (43) ausgebildet ist, die erste Temperaturzone über mehrere Zeitpunkte oder mehrere Frames hinweg, die zeitlich aufeinander folgen, zu bestimmen.

**8.** Messsystem (1) gemäß einem der vorherigen Ansprüche, wobei der erste und zweite Bereich direkt aneinander angrenzend sind und unterschiedliche Temperaturzonen aufweist; und/oder

wobei die Temperaturmessvorrichtung (41) ausgebildet ist, um mindestens eine dritte Oberflächentemperatur für einen dritten Bereich des Messfelds (41m, 41m') der Temperaturmessvorrichtung (41) zu erfassen.

9. Messsystem (1) gemäß einem der vorherigen Ansprüche, wobei der erste und der zweite Bereich (22_1, 22_2) und/oder der erste, der zweite sowie ein dritter Bereich entlang einer erwarteten Bewegungsrichtung (10B) angeordnet sind.

10. Messsystem (1) gemäß einem der vorherigen Ansprüche, wobei die Auswertevorrichtung (43) ausgebildet ist, um einen angehaltenen Zustand der Baumaschine (10) zu erkennen, wenn keine Verschiebung vorliegt und/oder um ein Anfahren zu erkennen, sobald eine Verschiebung erfolgt.

11. Messsystem (1) gemäß einem der vorherigen Ansprüche, wobei die Auswertevorrichtung (43) ausgebildet ist, um den bestimmten Bewegungsparameter anhand von GNSS-Daten abzugleichen; und/oder
wobei das Messsystem (1) einen GNSS-Empfänger (47, 60) umfasst, der GNSS-Daten liefert, sodass die Auswertevorrichtung (43) den bestimmten Bewegungsparameter anhand von GNSS-Daten abgleichen kann.

12. Messsystem (1) gemäß einem der vorherigen Ansprüche, wobei die Temperaturmessvorrichtung (41) auf eine aufzubringende Asphaltschicht, die als Referenzfläche (22) dient, ausgerichtet ist und/oder ausgebildet ist, um die Oberflächentemperatur der Asphaltschicht in zumindest dem ersten und zweiten Bereich (22_2) beim Einbau der Asphaltschicht zu bestimmen.

13. Messsystem (1) gemäß einem der vorherigen Ansprüche, wobei die Temperaturmessvorrichtung (41) zumindest ein Thermopile-Array oder Pyrometer-Array umfasst.

14. Messsystem (1) gemäß einem der vorherigen Ansprüche, wobei die Temperaturmessvorrichtung (41) zumindest zwei Arrays umfasst; und/oder
wobei die Temperaturmessvorrichtung (41) zumindest zwei nebeneinander angeordnete Arrays umfasst, die auf zwei angrenzende Messfelder der Arrays gerichtet sind.

15. Messsystem (1) gemäß einem der vorherigen Ansprüche, wobei die Temperaturmessvorrichtung (41) zumindest zwei nebeneinander angeordnete Arrays umfasst, die auf einen sich überlappenden Bereich (BM) der Messfelder der Arrays gerichtet sind, und

(a) ein Abstand H der Temperaturmessvorrichtung (41) zur Referenzfläche (22) von der Temperaturmessvorrichtung (41) oder von der Auswertevorrichtung (43) bestimmbar ist; und/oder
(b) bei einer Änderung des Abstands H der Temperaturmessvorrichtung (41) zur Referenzfläche (22) der von den Arrays erfasste überlappende Bereich (BM) der Messfelder in seiner Breite quer zur Bewegungsrichtung (10B) der Baumaschine (10) gesehen gleich bleibt.

16. Messsystem (1) gemäß einem der vorherigen Ansprüche, wobei der zu bestimmende Bewegungsparameter eine Kante beschreibt, die sich entlang und/oder im Wesentlichen entlang der Bewegungsrichtung (10B) erstreckt; und/oder
wobei der Bewegungsparameter eine Kante beschreibt, die anhand eines Heiß-Kalt-Übergangs, eines Heiß-Warm-Übergangs und/oder anhand von zwei sich entlang der Bewegungsrichtung 10B erstreckenden Temperaturbereichen und/oder entlang zweier Temperaturbereichen mit einer Temperaturdifferenz von größer 3°, größer 10°, größer 20° oder größer 50° bestimmbar ist.

17. Messsystem (1) gemäß einem der vorherigen Ansprüche, wobei die Temperaturmessvorrichtung (41) ein gegenüber der Baumaschine (10) definiertes, fest definiertes und/oder bekanntes Messfeld (41m) aufweist; und/oder

wobei das Messfeld (41m) in einem Bereich hinter der Baumaschine (10) angeordnet ist; und/oder
wobei das Messfeld (41m) in einem Bereich vor der Baumaschine (10) angeordnet ist; und/oder
wobei das Messfeld (41m) in einem Bereich seitlich der Baumaschine (10) angeordnet ist.

18. Baumaschine (10), insbesondere Straßenbaumaschine (10), mit einem Messsystem (1) gemäß einem der vorherigen Ansprüche.

19. Verfahren zum Bestimmen eines Bewegungsparameters für eine Baumaschine (10), insbesondere einen Straßenbaumaschine (10), unter Verwendung eines Messystems nach einem der Ansprüche 1-17 mit folgenden Schritten:

Ermitteln einer ersten Oberflächentemperatur für einen ersten Bereich (22_1) eines Messfelds (41m, 41m') der Temperaturmessvorrichtung (41) und Ermitteln einer zweiten Oberflächentemperatur für einen zweiten Bereich (22_2) des Messfelds (41m, 41m') der Temperaturmessvorrichtung (41) mittels einer Temperaturmessvorrichtung (41), wobei die Temperaturmessvorrichtung (41) auf eine Referenzfläche (22), gegenüber welcher die Baumaschine (10) sich bewegt, ausgerichtet ist und das Messfeld (41m, 41m') der Temperaturmessvorrichtung (41) in Abhängigkeit von einer Bewegung der Baumaschine (10) entlang der Referenzfläche verschoben wird; und

Bestimmen eines Bewegungsparameters anhand einer Verschiebung einer ersten Temperaturzone (22_1, 22_1'), definiert für einen ersten Zeitpunkt (t1) durch die erste Oberflächentemperatur im ersten Bereich (22_1), relativ zu dem ersten und/oder zweiten Bereich (22_2) oder relativ zu dem Messfeld (41m, 41m') der Temperaturmessvorrichtung (41).

20. Computerprogramm zur Durchführung der schritte des Verfahrens nach Anspruch 19, wenn das Programm auf einem Messsystem nach einem der Ansprüche 1 bis 17 abläuft.

**Claims**

1. A measurement system (1) for a construction machine (10), in particular a road construction machine (10), comprising:

    a temperature measuring device (41) configured to determine a first surface temperature for a first area (22_1) of a measuring field (41m, 41m') of the temperature measuring device (41) as well as a second surface temperature for a second area (22_2) of the measuring field (41m, 41m') of the temperature measuring device (41), the temperature measuring device (41) being directed to a reference surface (22), in relation to which the construction machine (10) is moving, and the measuring field (41m, 41m') of the temperature measuring device (41) being shifted as a function of a movement (10B) of the construction machine (10) along the reference surface (22); and
    an evaluation device (43) configured to determine a movement parameter by means of a shift in a first temperature zone (22_1, 22_1'), defined for a first point in time (t1) by the first surface temperature within the first area (22_1), in relation to the first and/or second area(s) (22_2) or in relation to the measuring field (41m, 41m') of the temperature measuring device (41).

2. The measurement system (1) as claimed in claim 1, wherein the evaluation device (43) is configured to detect a movement parameter by means of a shift of the first temperature zone (22_1, 22_1'), which is based on a heat change or a changing heat distribution, across the first and/or second area(s) (22_1, 22_2).

3. The measurement system (1) as claimed in any of the preceding claims, wherein the shift is effected along a direction of movement (10B) of the construction machine (10) as a result of the movement (10B) of the construction machine (10).

4. The measurement system (1) as claimed in any of the preceding claims, wherein the movement parameter describes a speed of the construction machine (10) and/or a distance covered by the construction machine (10).

5. The measurement system (1) as claimed in any of the preceding claims, wherein the evaluation device (43) is configured to look at a shift path of the first temperature zone in relation to time so as to determine a speed of the construction machine (10) and/or a movement of the construction machine (10) and/or the movement parameter.

6. The measurement system (1) as claimed in any of the preceding claims, wherein the evaluation device (43) is configured, by means of the first surface temperature, to identify a temperature zone and to detect the shift in the first temperature zone in relation to the first and/or second area(s) (22_2) or in relation to the measuring field of the temperature measuring device (41).

7. The measurement system (1) as claimed in any of the preceding claims, wherein the evaluation device (43) is configured to determine the first temperature zone over several points in time or over several frames successive in time.

8. The measurement system (1) as claimed in any of the preceding claims, wherein the first and second areas are directly adjacent to each other and comprise different temperature zones; and/or wherein the temperature measuring device (41) is configured to sense at least one third surface temperature for a third area of the measuring field (41m, 41m') of the temperature measuring device (41).

9. The measurement system (1) as claimed in any of the preceding claims, wherein the first and second areas (22_1, 22_2) and/or the first and second areas as well as a third area are arranged along an expected direction of movement (10B).

10. The measurement system (1) as claimed in any of the preceding claims, wherein the evaluation device (43) is configured to detect a halted state of the construction machine (10) when no shift has occurred and/or to detect a start-up as soon as a shift occurs.

11. The measurement system (1) as claimed in any of the preceding claims, wherein the evaluation device (43) is configured to compare and adjust the determined movement parameter by means of GNSS data; and/or

the measurement system (1) including a GNSS receiver (47, 60) which provides GNSS data, so that the evaluation device (43) may compare and adjust the determined movement parameter by means of GNSS data.

12. The measurement system (1) as claimed in any of the preceding claims, wherein the temperature measuring device (41) is directed to an asphalt layer to be deposited which serves as a reference surface (22), and/or is configured to determine the surface temperature of the asphalt layer in at least the first and second areas (22_2) during installation of the asphalt layer.

13. The measurement system (1) as claimed in any of the preceding claims, wherein the temperature measuring device (41) includes at least a thermopile array or pyrometer array.

14. The measurement system (1) as claimed in any of the preceding claims, wherein the temperature measuring device (41) includes at least two arrays; and/or wherein the temperature measuring device (41) includes at least two adjacently arranged arrays directed to two adjacent measuring fields of the arrays.

15. The measurement system (1) as claimed in any of the preceding claims, wherein the temperature measuring device (41) includes at least two adjacently arranged arrays directed to an overlapping area (BM) of the measuring fields of the arrays, and

   (a) a distance H of the temperature measuring device (41) to the reference surface (22) may be determined by the temperature measuring device (41) or by the evaluation device (43); and/or

   (b) upon a change in the distance H of the temperature measuring device (41) to the reference surface (22), the overlapping area (BM) of the measuring fields that is sensed by the arrays maintains its width when seen in a direction transverse to the direction of movement (10B) of the construction machine (10).

16. The measurement system (1) as claimed in any of the preceding claims, wherein the movement parameter to be determined describes an edge extending along and/or essentially along the direction of movement (10B); and/or

wherein the movement parameter describes an edge which may be determined by means of a hot/cold transition, a hot/warm transition and/or by means of two temperature areas extending along the direction of movement (10B) and/or along two temperature areas exhibiting a temperature difference larger than 3°, larger than 10°, larger than 20°, or larger than 50°.

17. The measurement system (1) as claimed in any of the preceding claims, wherein the temperature measuring device (41) comprises a measuring field (41m) which is defined, fixedly defined and/or known in relation to the construction machine (10); and/or

   wherein the measuring field (41m) is arranged in an area located behind the construction machine (10); and/or
   wherein the measuring field (41m) is arranged in an area located in front of the construction machine (10); and/or
   wherein the measuring field (41m) is arranged in an area located on the side of the construction machine (10).

18. A construction machine (10), in particular road construction machine (10), comprising a measurement system (1) as claimed in any of the preceding claims.

19. A method of determining a movement parameter for a construction machine (10), in particular a road construction machine (10), using a measurement system as claimed in any of claims 1 to 17, comprising:

   determining a first surface temperature for a first area (22_1) of a measuring field (41m, 41m') of the temperature measuring device (41) and determining a second surface temperature for a second area (22_2) of the measuring field (41m, 41m') of the temperature measuring device (41) by means of a temperature measuring device (41), said temperature measuring device (41) being directed to a reference surface (22), in relation to which the construction machine (10) is moving, and the measuring field (41m, 41m') of the temperature measuring device (41) being shifted as a function of a movement of the construction machine (10) along the reference surface; and
   determining a movement parameter by means of a shift in a first temperature zone (22_1, 22_1'), defined for a first point in time (t1) by the first surface temperature within the first area (22_1), in relation to the first and/or second area(s) (22_2) or in relation to the measuring field (41m, 41m') of the temperature measuring device (41).

20. A computer program for performing the steps of the method as claimed in claim 19, when the program runs on a measurement system as claimed in any of claims 1 to 17.

**Revendications**

1. Système de mesure (1) pour une machine de construction (10), en particulier une machine de construction routière (10), aux caractéristiques suivantes:

   un dispositif de mesure de température (41) qui est conçu pour déterminer une première température de surface pour une première zone (22_1) d'un champ de mesure (41m, 41m') du dispositif de mesure de température (41) ainsi qu'une deuxième température de surface pour une deuxième zone (22_2) du champ de mesure (41m, 41m') du dispositif de mesure de température (41), où le dispositif de mesure de température (41) est orienté vers une surface de référence (22) par rapport à laquelle se déplace la machine de construction (10) et le champ de mesure (41m, 41m') du dispositif de mesure de température (41) est déplacé en fonction d'un déplacement (10B) de la machine de construction (10) le long de la surface de référence (22); et

   un dispositif d'évaluation (43) qui est conçu pour déterminer un paramètre de déplacement à l'aide d'un déplacement d'une première zone de température (22_1, 22_1') définie pour un premier moment (t1) par la première température de surface dans la première zone (22_1) par rapport à la première et/ou à la deuxième zone (22_2) ou par rapport au champ de mesure (41m, 41m') du dispositif de mesure de température (41).

2. Système de mesure (1) selon la revendication 1, dans lequel le dispositif d'évaluation (43) est conçu pour reconnaître un paramètre de déplacement à l'aide d'un déplacement sur base d'un changement de chaleur ou sur base d'une distribution de chaleur changeante de la première zone de température (22_1, 22_1') sur la première et/ou la deuxième zone (22_1, 22_2).

3. Système de mesure (1) selon l'une des revendications précédentes, dans lequel le déplacement dans une direction de déplacement (10B) de la machine de construction (10) a lieu par suite du déplacement (10B) de la machine de construction (10).

4. Système de mesure (1) selon l'une des revendications précédentes, dans lequel le paramètre de déplacement décrit une vitesse de la machine de construction (10) et/ou un trajet parcouru de la machine de construction (10).

5. Système de mesure (1) selon l'une des revendications précédentes, dans lequel le dispositif d'évaluation (43) est conçu pour établir un trajet de déplacement de la première zone de température en rapport avec le temps pour déterminer une vitesse de la machine de construction (10) et/ou un déplacement de la machine de construction (10) et/ou le paramètre de déplacement.

6. Système de mesure (1) selon l'une des revendications précédentes, dans lequel le dispositif d'évaluation (43) est conçu pour identifier, à l'aide de la première température de surface, une zone de température et pour reconnaître le déplacement de la première zone de température par rapport à la première et/ou à la deuxième zone (22_2) ou par rapport au champ de mesure du dispositif de mesure de température (41).

7. Système de mesure (1) selon l'une des revendications précédentes, dans lequel le dispositif d'évaluation (43) est conçu pour déterminer la première zone de température sur plusieurs moments ou sur plusieurs trames qui se suivent dans le temps.

8. Système de mesure (1) selon l'une des revendications précédentes, dans lequel la première et la deuxième zone sont directement adjacentes l'une à l'autre et présentent des zones de température différentes; et/ou

   dans lequel le dispositif de mesure de température (41) est conçu pour détecter au moins une troisième température de surface pour une troisième zone du champ de mesure (41m, 41m') du dispositif de mesure de température (41).

9. Système de mesure (1) selon l'une des revendications précédentes, dans lequel la première et la deuxième zone (22_1, 22_2) et/ou la première, la deuxième ainsi qu'une troisième zone sont disposées dans une direction de déplacement attendue (10B).

10. Système de mesure (1) selon l'une des revendications précédentes, dans lequel le dispositif d'évaluation (43) est conçu pour reconnaître un état d'arrêt de la machine de construction (10) lorsqu'il n'y a pas de déplacement et/ou pour reconnaître un démarrage dès qu'il se produit un déplacement.

11. Système de mesure (1) selon l'une des revendications précédentes, dans lequel le dispositif d'évaluation (43) est conçu pour ajuster le paramètre de déplacement déterminé à l'aide des données de GNSS; et/ou

   dans lequel le système de mesure (1) comporte un récepteur de GNSS (47, 60) qui fournit des données de GNSS, de sorte que le dispositif d'évaluation (43) puisse ajuster le paramètre de déplacement déterminé à l'aide des données de GNSS.

12. Système de mesure (1) selon l'une des revendications précédentes, dans lequel le dispositif de mesure de température (41) est orienté vers une couche d'asphalte à appliquer qui sert de surface de référence (22) et/ou est conçu pour déterminer la température de surface de la couche d'asphalte dans au moins la première et la deuxième zone (22_2) lors de l'incorporation de la couche d'asphalte.

13. Système de mesure (1) selon l'une des revendications précédentes, dans lequel le dispositif de mesure de température (41) comporte au moins un réseau de thermopiles ou un réseau de pyromètres.

14. Système de mesure (1) selon l'une des revendications précédentes, dans lequel le dispositif de mesure de température (41) comporte au moins deux réseaux; et/ou
dans lequel le dispositif de mesure de température (41) comporte au moins deux réseaux disposés l'un à côté de l'autre qui sont orientés vers deux champs de mesure adjacents des réseaux.

15. Système de mesure (1) selon l'une des revendications précédentes, dans lequel le dispositif de mesure de température (41) comporte au moins deux réseaux disposés l'un à côté de l'autre qui sont orientés vers une zone venant en recouvrement (BM) des champs de mesure des réseaux, et

(a) une distance H entre le dispositif de mesure de température (41) et la surface de référence (22) peut être déterminée par le dispositif de mesure de température (41) ou par le dispositif d'évaluation (43); et/ou
(b) en cas de modification de la distance H entre le dispositif de mesure de température (41) et la surface de référence (22), la zone venant en recouvrement (BM) des champs de mesure détectée par les réseaux reste la même, vue dans sa largeur transversalement à la direction de déplacement (10B) de la machine de construction (10).

16. Système de mesure (1) selon l'une des revendications précédentes, dans lequel le paramètre de déplacement à déterminer décrit une arête qui s'étend dans et/ou sensiblement dans la direction de déplacement (10B); et/ou
dans lequel le paramètre de déplacement décrit une arête qui peut être déterminée à l'aide d'une transition chaud-froid, d'une transition chaud-tiède et/ou à l'aide de deux zones de température s'étendant dans la direction de déplacement 10B et/ou à l'aide de deux zones de température avec une différence de température de plus de 3°, de plus de 10°, de plus de 20° ou de plus de 50°.

17. Système de mesure (1) selon l'une des revendications précédentes, dans lequel le dispositif de mesure de température (41) présente un champ de mesure (41m) défini, défini de manière ferme et/ou connu par rapport à la machine de construction (10); et/ou

dans lequel le champ de mesure (41m) est disposé dans une zone derrière la machine de construction (10); et/ou
dans lequel le champ de mesure (41m) est disposé dans une zone devant la machine de construction (10); et/ou
dans lequel le champ de mesure (41m) est disposé dans une zone sur le côté de la machine de construction (10).

18. Machine de construction (10), en particulier machine de construction routière (10), avec un système de mesure (1) selon l'une des revendications précédentes.

19. Procédé de détermination d'un paramètre de déplacement pour une machine de construction (10), en particulier une machine de construction routière (10), à l'aide d'un système de mesure selon l'une des revendications 1 à 17, aux étapes suivantes consistant à:

déterminer une première température de surface pour une première zone (22_1) d'un champ de mesure (41m, 41m') du dispositif de mesure de température (41) et déterminer une deuxième température de surface pour une deuxième zone (22_2) du champ de mesure (41m, 41m') du dispositif de mesure de température (41) au moyen d'un dispositif de mesure de température (41), où le dispositif de mesure de température (41) est orienté vers une surface de référence (22) par rapport à laquelle se déplace la machine de construction (10), et le champ de mesure (41m, 41m') du dispositif de mesure de température (41) est déplacé en fonction d'un déplacement de la machine de construction (10) le long de la surface de référence; et
déterminer un paramètre de déplacement à l'aide d'un déplacement d'une première zone de température (22_1, 22_1') définie pour un premier moment (t1) par la première température de surface dans la première zone (22_1) par rapport à la première et/ou à la deuxième zone (22_2) ou par rapport au champ de mesure (41m, 41m') du dispositif de mesure de température (41).

**EP 3 835 485 B1**

20. Programme d'ordinateur pour la mise en oeuvre des étapes du procédé selon la revendication 19 lorsque le programme est exécuté sur un système de mesure selon l'une des revendications 1 à 17.

Fig. 1

EP 3 835 485 B1

Fig. 2a

EP 3 835 485 B1

EP 3 835 485 B1

Fig. 2b

Fig. 3a

Fig. 3b

EP 3 835 485 B1

Fig. 3c

Fig. 3d

411  412  413  41,41a/b

α  β

Fig. 3e

412  411  413  41,41a/b

α  β

Fig. 3f

411,413  412,414  41,41a/b

α

Fig. 3g

411,413  412,414  41,41a/b

α

Fig. 3h

Fig. 3i

Fig. 3j

Fig. 4

EP 3 835 485 B1

Fig. 5

EP 3 835 485 B1

Fig. 6a

Fig. 6b

Fig. 6c

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200070150 A1
- DE 202009016129 U1
- DE 202013001597 U1
- DE 102014222693 A1
- DE 102016207584 B3
- CN 102691251 A

- EP 2789741 A1
- EP 2982951 A1
- EP 2990531 A1
- EP 3112812 A1
- EP 3270109 A1
- EP 3456880 A1